# FASCICULE DE BREVET EUROPEEN

(11) **EP 0 604 298 B1**
(45) Date de publication et mention de la délivrance du brevet: **29.01.1997**
(21) Numéro de dépôt: 93403106.3
(22) Date de dépôt: 20.12.1993
(51) Int. Cl.: B64C 27/46, B64C 27/45, B29D 31/00

(54) **Pale en composite thermoplastique, notamment pour rotor arrière caréné d'hélicoptère, et son procédé de fabrication**
Faserverstärktes thermoplastisches Blatt, insbesondere eines eingelassenen Heckrotors und sein Herstellungsverfahren
Composite thermoplastic blade, in particular for helicopter shrouded tail rotor, and its manufacturing process

(30) Priorité: 23.12.1992 FR 9215607
(43) Date de publication de la demande: 29.06.1994
(73) Titulaire: EUROCOPTER FRANCE, F-13725 Marignane Cédex (FR)
(72) Inventeur: Coffy, René Louis, F-13960 Sausset Les Pins (FR)
(74) Mandataire: Bérogin, Francis

(56) Documents cités:
- EP-A- 0 212 724
- EP-A- 0 296 014
- EP-A- 0 396 456
- FR-A- 1 443 155
- DESIGN ENGINEERING Juillet 1987 , LONDON GB pages 49 - 51 'NEW HEIGHTS FOR COMPOSITES'

## Description

L'invention concerne une pale, dont les éléments essentiels sont en matériau composite à matrice en résine synthétique de rigidification, renforcée de fibres, minérales ou organiques, à haute résistance mécanique.

Dans une application avantageuse, une telle pale est destinée à l'équipement d'un rotor multi-pales à pas variable et à pales démontables individuellement, en particulier un rotor arrière, de préférence caréné, d'un hélicoptère.

L'invention concerne également un procédé de fabrication d'une telle pale.

Par les brevets français FR-2542695 et FR-2616409, on connait déjà de telles pales, du type comprenant :
- une coque rigide composite, à profil aérodynamique, allongée longitudinalement selon l'envergure de la pale, et dont une extrémité longitudinale, destinée à être tournée vers le moyeu du rotor, présente un pied de pale, ladite coque comportant au moins une couche de fibres de renfort agglomérées par une matrice en une résine synthétique de rigidification,
- au moins un longeron, dont au moins une partie est logée sensiblement longitudinalement dans la coque, et comportant au moins un faisceau composite allongé, de fibres de renfort continues et unidirectionnelles agglomérées par une matrice en une résine synthétique de rigidification, et
- au moins un corps de remplissage, disposé dans la coque entre cette dernière et au moins un longeron.

De plus, dans un exemple de pale décrit dans FR-2 616 409, chaque corps de remplissage est également un corps composite, à fibres de renfort agglomérées par une matrice en une résine synthétique de rigidification.

Pour être démontable individuellement et à pas variable, chaque pale des brevets précités comporte une partie d'emplanture, déformable en torsion autour d'un axe sensiblement parallèle à l'axe longitudinal de la pale, et par laquelle cette dernière est rattachée au moyeu du rotor. Cette partie d'emplanture comporte au moins un faisceau composite, allongé et torsible, qui prolonge longitudinalement, hors de la coque, au moins un faisceau composite d'au moins un longeron, en traversant le pied de pale, qui est tubulaire, l'extrémité du faisceau torsible de la partie d'emplanture qui est située du côté opposé à la coque étant conformée en boucle entourant une bobine fixée de manière amovible au moyeu par un boulon. En outre, le pied de pale tubulaire comporte un manchon, métallique ou composite, dont les extrémités axiales sont entourées chacune par l'une de deux collerettes coaxiales permettant l'encastrement et le montage en rotation du pied de pale dans deux ouvertures coaxiales ménagées dans deux parois du moyeu de rotor, le manchon présentant de plus, entre ces deux collerettes, un levier de commande de pas, en saillie radiale vers l'extérieur, et destiné à être articulé à un dispositif de commande collective du pas des pales. A l'intérieur du manchon, le pied de pale est constitué en partie par des prolongements des couches de fibres agglomérées de résine constituant la coque rigide de la pale, éventuellement par des prolongements de couches de fibres de renfort agglomérées par une résine synthétique, venant renforcer la coque dans sa partie voisine du pied de pale, et en partie d'éléments de remplissage et/ou de couches de tissu de fibres ou nappes de fibres agglomérées de résine synthétique pour renforcer le pied de pale.

Dans les deux brevets précités, tous les éléments composites, en particulier la coque, le ou les longerons, la partie d'emplanture, au moins partiellement le pied de pale tubulaire, et, éventuellement, le ou les corps de remplissage, sont réalisés dans des matériaux composites, à base de matrices organiques polymérisables, constituées de résines synthétiques thermodurcissables, par exemple des résines époxydes. Les fibres de renfort de ces matériaux composites sont, pour chaque pale, de différentes espèces, et en général de verre, de carbone, ou encore des fibres aramides, et, en outre, ces pales peuvent comporter certains éléments constitués en des matériaux synthétiques, mais non composites, tels que des mousses de polyuréthane.

Il en résulte des inconvénients. Sur une même pale, on peut devoir utiliser plusieurs résines thermodurcissables, adaptées chacune à des fibres de renfort particulières, ainsi, éventuellement, qu'à des éléments synthétiques non composites. Cependant, ces différentes résines thermodurcissables doivent être compatibles entre elles. Surtout, les matrices thermodurcissables, sous l'effet de la température et/ou du temps, subissent une transformation chimique appelée polymérisation. Cette réaction créé une modification du réseau moléculaire, qui devient tridimensionnel, infusible et irréversible. Au cours de ce cycle thermique, ces matrices thermodurcissables passent successivement par trois étapes : liquide, gel, solide. Les pièces à base de matrices thermodurcissables prennent leur forme définitive au cours de la montée en température, juste avant la gelification de la matrice. Par exemple, pour une matrice de la classe des polymérisations dites à 180°C, cet état est obtenu à environ 160°C. Au-delà, la matrice devient solide, et la pièce a pris sa forme définitive. Cet état est irréversible.

Ce caractère irréversible et infusible de l'état résultant d'une polymérisation est la cause de nombreuses difficultés d'industrialisation de ces pales : le taux de rebuts est important, car les procédés de fabrication, faisant intervenir une telle polymérisation, sont d'une mise en oeuvre délicate et parfois longue, et conduisent à l'obtention de pales qui ne présentent pas toujours les caractéristiques dimensionnelles requises. Du fait de l'irréversiblité de la polymérisation, les recyclages des rebuts sont impossibles, et les réparations, pour remise au standard, sont longues, coûteuses et délicates, lorsqu'elles sont possibles. La réaction chimique de polymérisation peut être à l'origine de dégagements gazeux toxiques, et le caractère réactif des produits impliqués pose des problèmes de péremption et de stockage de ces produits. Enfin, il est connu que les matériaux composites à matrices thermodurcissables présentent de médiocres tenues à la fatigue, aux chocs et impacts, en température, et une sensibilité au vieillissement humide.

Le problème à la base de l'invention est de remédier aux inconvénients précités des pales de l'état de la technique, et de proposer des pales substituables, d'une fiabilité améliorée et d'un coût de fabrication diminués.

Un autre but de l'invention est de proposer une pale dont la structure et la réalisation du pied de pale tubulaire sont extrêmement simplifiées par rapport aux exemples décrits dans le brevet FR-2 616 409.

La demande conjointe EP-A-604 297 propose une pale du type précité dont la résine des matrices de la coque, de chaque corps de remplissage et de chaque faisceau de chaque longeron est une résine thermoplastique, assurant l'assemblage et la cohésion entre eux de la coque et de la partie de chaque longeron logée dans la coque, et, selon l'invention, ladite résine thermoplastique assure également l'assemblage et la cohésion entre chaque corps de remplissage et ladite coque et ladite partie de chaque longeron.

Les pièces à base de matrices thermoplastiques prennent leurs formes définitives au moment de la fusion de la matrice, sur une plage de température d'environ 20°C au-dessous de la température de fusion proprement dite. Au refroidissement, la matrice revient à son état initial solide, et la pièce conserve sa forme définitive. Ce phénomène est réversible.

La transformation des matériaux composites à matrices thermoplastiques, par simple fusion ou ramollissement de celles-ci sous l'effet d'un chauffage, et sans modification chimique, permet des cadences de fabrication plus élevées de pales réalisées à l'aide de ces matériaux. Il en est d'autant plus ainsi que la polymérisation, que les composites à matrices thermodurcissables subissent, après drapage et mise en place dans un moule comme dans les procédés décrits dans les deux brevets précités, peut durer de 4 à 90 heures, suivant la nature et/ou l'épaisseur des composites. Au contraire, les composites à matrices thermoplastiques, qui ne connaissent pas de réaction chimique ni exothermique pendant leur transformation, et ce quelle que soit leur épaisseur, peuvent être mis en oeuvre rapidement, et de manière réversible, par un procédé élémentaire, qui, réduit à sa plus simple expression, consiste à chauffer ces composites pour fondre la matrice, à presser ces composites pour les compacter et/ou mettre en forme, et ensuite à les refroidir pour consolider leur matrice. Ces composites thermoplastiques peuvent donc être transformés à grande cadence. Leur caractère réversible, tel que mentionné ci-dessus, offre des possibilités de réparation, par chauffage puis remise en forme, des pales non conformes aux spécifications, par exemple dimensionnelles, ainsi que des possibilités de recyclage des matériaux utilisés. Il en résulte une diminution des rebuts. De plus, la matrice adhère à chaud sur elle-même. Cette propriété est particulièrement avantageuse puisqu'elle permet non seulement de procéder à des réparations localisées mais également, comme expliqué ci-dessous, la fabrication des pales par un procédé consistant à assembler, par fusion de la matrice et sous pression, des pièces élémentaires préfabriquées par une grande diversité de techniques de transformation et d'assemblage (compactage, estampage, pultrusion et injection notamment), à partir de demi-produits réalisés en composites à matrices thermoplastiques et disponibles dans le commerce.

De plus, l'absence de réaction chimique et de réaction exothermique permet de s'affranchir des problèmes de climatisation des ateliers de fabrication des pales et de leurs composants, ainsi que des problèmes de stockage et de péremption des matériaux concernés.

Tous ces facteurs concourent à une réduction des coûts de fabrication et de fonctionnement des pales.

Pour réaliser les pales selon l'invention, on sélectionne avantageusement une résine thermoplastique qui est une résine de poly-ether-ether-cétone (PEEK), et les fibres de renfort, notamment de la coque, du ou des longerons, et du ou des corps de remplissage, sont choisies parmi les fibres de carbone ou de verre, mais, de préférence, sont toutes de même nature, et en particulier en carbone.

On utilise ainsi avantageusement des composites thermoplastiques dits "PEEK/carbone", qui, par rapport aux composites thermodurcissables des pales de l'état de la technique, présentent de plus les avantages d'un bon comportement mécanique général en statique, et d'une meilleure tenue à la fatigue, d'une bonne tolérance aux dommages et d'une grande résistance à l'environnement, et en particulier une insensibilité au vieillissement humide, une très bonne tenue en température, ainsi qu'aux chocs et impacts.

De plus, le choix d'une matrice PEEK permet d'obtenir un bon comportement au fluage et améliore la tenue en fatigue, qui est au moins deux fois supérieure à celle des diverses autres matrices thermoplastiques hautes performances connues et utilisées pour la réalisation de matériaux composites dans d'autres applications. Le choix d'une seule et même résine PEEK comme matrice et de fibres de renfort uniquement en carbone, ou éventuellement uniquement en verre, pour réaliser les différents éléments composites de la pale, évite toute disparité au niveau des résines d'agglomération et tout risque d'incompatibilité entre les différents constituants, contrairement aux pales décrites dans le brevet FR-2 616 409, dans lequel chaque résine thermodurcissable utilisée est adaptée à la nature des fibres de renfort, en verre, carbone ou aramide, qu'elle agglomère, ainsi qu'à la nature du ou des matériaux synthétiques, par exemple la mousse de polyuréthane, avec lequel ou lesquels elle est mise en contact.

Les composites thermoplastiques PEEK/carbone présentent donc des avantages de comportement en utilisation qui résultent de propriétés thermomécaniques remarquables, au moins du même ordre de grandeur, mais souvent même supérieures à celles de nombreux matériaux composites à matrices thermodurcissables utilisées pour la réalisation des pales de l'état de la technique.

On aboutit à une réduction du coût de fabrication et d'entretien ainsi qu'à une amélioration des pales selon l'invention par rapport à celles de l'état de la technique.

L'invention a également pour objet un procédé de fabrication de la pale présentée ci-dessus.

Le procédé de fabrication d'une pale selon l'invention, dont la coque composite est constituée d'un revêtement d'intrados et d'un revêtement d'extrados stratifiés, comprend les étapes suivantes, consistant :
- à réaliser chacun des revêtements stratifiés et longerons en composite thermoplastique de la pale sous la forme d'une pièce élémentaire préfabriquée,
- à disposer les pièces élémentaires préfabriquées dans un moule d'assemblage sous pression, comprenant une partie de moule inférieure et une partie de moule supérieure comportant des empreintes internes complémentaires, présentant respectivement la forme de la partie d'intrados et de la partie d'extrados de la pale, de sorte que lesdites pièces élémentaires préfabriquées occupent dans le moule les positions respectives qu'elles occupent dans la pale,
- à fermer le moule et à assurer l'assemblage par fusion desdites pièces élémentaires préfabriquées disposées dans le moule,
- à refroidir le moule, pour assurer la solidification de la matrice thermoplastique et la rigidification de l'ensemble des pièces élémentaires ainsi assemblées,
- à démouler la pale ainsi obtenue,
- à réaliser également chacun des corps de remplissage en composite thermoplastique de la pale sous la forme d'une pièce élémentaire préfabriquée, et à la disposer dans le moule,
- à utiliser un moule d'assemblage sous pression par chauffage,
- après fermeture du moule, à chauffer lesdites pièces à une température suffisante pour fondre la matrice thermoplastique, sous une pression suffisante pour assurer la continuité de la matrice thermoplastique entre lesdites pièces et leur assemblage par fusion sous pression, et
- après démoulage de la pale, à rapporter des bagues, par collage ou par frettage, autour d'un manchon de pied de pale, lui-même rapporté, par collage ou frettage, autour dudit pied de pale s'il n'est pas en composite thermoplastique et déjà assemblé par fusion sous pression aux autres pièces élémentaires préfabriquées de la pale.

Les différentes pièces élémentaires, préfabriquées par moulage par injection, pultrusion, estampage et compactage notamment, peuvent être réalisées sous la forme d'éléments rigides, ayant un aspect cartonneux, ou semi-rigides, ayant l'aspect de feuilles ou plaques, sans pégosité, éventuellement à partir de demi-produits composites thermoplastiques disponibles dans le commerce, tels que des tissus ou nappes de fibres continues ou longues et unidirectionnelles de verre ou de préférence de carbone, agglomérées par une résine thermoplastique, de préférence une résine PEEK, ou de plaques obtenues par superposition puis compactage de plusieurs couches de tels tissus ou telles nappes, ou encore de granulés de fibres de renfort courtes contenues à l'état sec dans une matrice thermoplastique, par exemple de fibres courtes de carbone dans une matrice PEEK, ces granulés constituant un matériau composite injectable à l'état fondu de la matrice.

L'invention sera mieux comprise, et d'autres caractéristiques et avantages de l'invention apparaîtront à la lecture de la description donnée ci-dessous d'un exemple de réalisation, décrit à titre non limitatif et en référence aux dessins annexés sur lesquels :
- la figure 1 est une vue en élévation latérale d'une pale pour rotor multi-pales, à pas variable, arrière et caréné d'hélicoptère,
- la figure 2 est une vue en plan, selon la flèche F de la figure 1, de cette pale,
- les figures 3 à 7 sont des vues en coupe transversale respectivement selon III-III, IV-IV, V-V, VI-VI et VII-VII de la figure 2,
- la figure 8 est une vue schématique en coupe axiale du pied de la pale des figures 1 et 2,
- la figure 9 est une vue partielle en perspective du pied de pale, de la partie d'emplanture et de l'attache feuilletée de la pale des figures 1 et 2,
- la figure 10 est une vue analogue à la figure 9 d'une variante de réalisation, dans laquelle le longeron de la pale a été modifié pour que sa partie d'emplanture présente une attache en boucle, à la place de l'attache feuilletée,
- la figure 11 est une vue en plan d'une plaque précompactée dans laquelle sont découpés des panneaux de revêtement d'intrados et d'extrados de la coque de la pale des figures 1 à 9,
- les figures 12 et 13 représentent schématiquement deux étapes de la réalisation par estampage des revêtements d'intrados et d'extrados,
- la figure 14 représente schématiquement un revêtement estampé en élévation latérale,
- la figure 15 représente ce revêtement en plan selon la flèche F de la figure 14,
- les figures 16, 17 et 18 représentent des vues en coupe transversale respectivement selon XVI-XVI, XVII-XVII, XVIII-XVIII de la figure 15,
- la figure 19 représente en plan une plaque précompactée dans laquelle sont découpés des éléments feuilletés de l'attache feuilletée de la pale selon les figures 1 à 9,
- les figures 20 et 21 représentent schématiquement des étapes de la fabrication du longeron avec attache feuilletée de la pale selon les figures 1 à 9,
- les figures 22 et 23 représentent schématiquement, respectivement en plan et en élévation latérale, le longeron fabriqué,
- les figures 24, 25 et 26 représentent des vues en coupe transversale, respectivement selon XXIV-XXIV, XXV-XXV, XXVI-XXVIde la figure 23, et
- la figure 27 représente schématiquement la mise en place des différents composants en composite thermoplastique de la pale des figures 1 à 9 dans un moule d'assemblage par fusion sous pression, pour la réalisation de la pale à partir de composants préfabriqués.

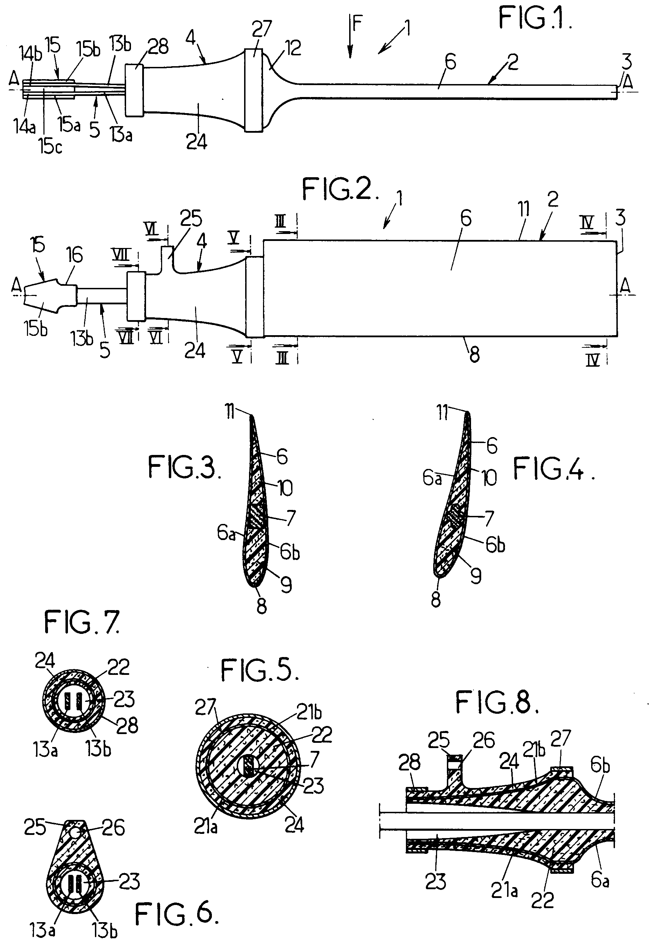

La pale 1 des figures 1 à 9 a sa partie courante ou profilée 2 qui se prolonge, du côté opposé au bout de pale 3, par un pied de pale 4 tubulaire, traversé par une partie d'emplanture 5, par laquelle la pale 1 est destinée à être reliée à un moyeu de rotor (non représenté), et qui est constituée par une partie externe à la partie courante 2, d'un longeron 7 s'étendant sur toute l'envergure de la pale 1.

Dans sa partie courante 2, la pale 1 comprend :
- une coque rigide 6, ayant la forme du profil aérodynamique souhaité, et allongée longitudinalement selon l'envergure,
- le longeron 7, dont une partie rectiligne est logée longitudinalement dans la coque 6, selon l'envergure, et qui est sensiblement centré sur l'axe longitudinal A-A de la pale, qui est l'axe de changement de pas de la pale, à environ 40 % en corde à partir du bord d'attaque 8,
- un corps de remplissage avant 9, logé dans la coque 6, entre le longeron 7 et le bord d'attaque 8, et
- un corps de remplissage arrière 10 logé dans la coque 6, entre le longeron 7 et le bord de fuite 11 de cette pale.

Dans sa partie courante 2, la pale peut également comprendre une coiffe (non représentée), en titane ou acier inoxydable, pour la protection du bord d'attaque 8.

La partie du longeron 7 logée dans la coque 6 présente une section transversale de forme sensiblement rectangulaire, dont la plus grande dimension est dirigée selon la corde de la pale, ou contenue sensiblement dans le plan de rotation de la pale et perpendiculaire à l'axe longitudinal A-A, et ceci au moins dans la partie de longeron 7 voisine du pied de pale 4 (voir les figures 3 et 5), bien que cette partie de longeron 7 puisse présenter une section rectangulaire jusqu'au bout de pale 3. Cependant, comme représenté sur la figure 4, et au moins au voisinage du bout de pale 3, le longeron 7 présente une section cruciforme. Comme la coque 6 est constituée d'un revêtement d'intrados 6a et d'un revêtement d'extrados 6b, qui s'étendent chacun du bord d'attaque 8 au bord de fuite 11, la section en croix du longeron 7 permet de stabiliser les revêtements 6a et 6b sur les deux faces extrêmes du longeron 7 qui sont directement en regard de ces revêtements 6a et 6b, lors d'assemblage par fusion sous pression des différents composants de la pale, comme décrit ci-dessous en référence notamment à la figure 27. Que sa section soit sensiblement rectangulaire ou cruciforme, le longeron 7 n'est pas vrillé selon l'envergure, et autour de l'axe de changement de pas A-A, ce qui est favorable pour sa fabrication tout en permettant de lui donner les raideurs requises. Par contre, la section profilée des revêtements 6a et 6b ainsi que des corps de remplissage avant 9 et arrière 10 est progressivement vrillée autour de l'axe A-A de la pale, pour donner à cette dernière la loi de vrillage souhaitée, depuis la portion de partie courante 2 adjacente au pied 4 jusqu'au bout de pale 3, et comme représenté sur les figures 3 et 4. Ainsi, le précalage de la pale 1 est très facile à créer par rapport au plan de rotation du rotor.

Chaque revêtement 6a ou 6b est stratifié et constitué, de l'intérieur vers l'extérieur de la coque 6, d'un empilement de deux couches de nappes de fibres continues et unidirectionnelles de carbone, orientées sensiblement selon l'axe longitudinal A-A, et agglomérées dans une matrice de polyether-ether-cétone communément appelée résine PEEK, et d'une couche de tissu de fibres de carbone, agglomérées dans la même résine PEEK, et dont les directions des fils de chaîne et de trame sont orientées sensiblement à 45° par rapport à l'axe longitudinal de la pale. La résine PEEK est un polymère thermoplastique à structure aromatique, comportant peu d'atomes d'hydrogène, et présentant une structure cristalline, une température de transition vitreuse d'environ 150°C, et une température de fusion de l'ordre de 390°C.

En variante, chacun des revêtements 6a et 6b peut être constitué d'un empilement comprenant plus d'une couche de tissu de fibres de carbone, par dessus les deux couches de nappes de fibres de carbone unidirectionnelles. Quel que soit le nombre des couches de fibres formant l'empilement stratifié de chaque revêtement 6a ou 6b, l'ensemble de ces couches est aggloméré par la résine PEEK rigidifiée, de façon à former un caisson assurant, avec son remplissage, la rigidité en torsion de la pale 1.

Les corps de remplissage avant 9 et arrière 10 sont chacun constitués d'un profilé pultrudé de fibres continues et unidirectionnelles de carbone, orientées sensiblement parallèlement à l'axe longitudinal A-A, et agglomérées par la résine PEEK.

Le longeron 7 est constitué d'un unique écheveau composite et allongé de fibres de carbone continues et unidirectionnelles, orientées longitudinalement selon l'axe A-A, et agglomérées également par de la résine PEEK. Cet écheveau est agencé, dans la coque 2, en une lame allongée de section pleine, ayant, comme déjà dit, une forme rectangulaire ou cruciforme dans une portion plus ou moins longue, du côté du bout de pale 3, mais toujours rectangulaire dans sa portion adjacente au pied de pale 4. Par les faces supérieure et inférieure de cet écheveau, le longeron 7 est rigidement lié, soit directement, soit par l'intermédiaire des corps de remplissage de même nature 9 et 10, à la coque 6 dans laquelle il est reçu. Cet écheveau se prolonge axialement à l'extérieur de la coque 6, en traversant le pied tubulaire 4, et forme ainsi, par sa partie qui sort de la partie profilée 2, la partie d'emplanture 5 de cette pale. Au niveau de la zone de transition 12, par laquelle la coque 2 se raccorde au pied 4, qui la prolonge axialement, l'écheveau de section rectangulaire du longeron 7 se subdivise en deux faisceaux égaux 13a et 13b, ayant chacun également la forme d'une lame de section rectangulaire, qui s'écartent progressivement l'un de l'autre dans une direction perpendiculaire à la plus grande dimension de leurs sections, ainsi qu'à celle de la partie rectangulaire du longeron 7 dans la coque 6. A l'extrémité axiale de la partie d'emplanture 5, du côté opposé au pied 4, les deux faisceaux 13a et 13b de cette partie d'emplanture 5 présentent chacun une portion d'extrémité de liaison 14a ou 14b, parallèle à la portion d'extrémité de liaison de l'autre faisceau 13a ou 13b, et par laquelle chacun des faisceaux 13a et 13b est solidarisé à une attache feuilletée commune 15, qui constitue l'attache de liaison de la partie d'emplanture 5 à un moyeu (non représenté) de rotor. Les deux faisceaux d'attache de pale 13a et 13b, qui sont allongés sensiblement dans le prolongement longitudinal de la coque 6 et de la partie de longeron 7 interne à cette coque, ont donc chacun la même structure composite que la partie de longeron 7 interne à la coque 6, avec laquelle ils sont d'une seule pièce, et chacun des faisceaux 13a et 13b est torsible autour de son axe longitudinal, de sorte que la partie d'emplanture 5 est elle-même torsible autour de l'axe longitudinal A-A.

Une telle pale, avec une partie d'emplanture constituée de plusieurs faisceaux composites allongés et torsibles, dont les portions d'extrémité de liaison au moyeu sont solidaires d'une même attache feuilletée, pour la liaison à un moyeu de rotor dont la structure comprend des moyens adaptés à la retenue d'une telle attache feuilletée, est plus précisément décrite dans la demande conjointe précitée de la demanderesse, à laquelle on se reportera pour davantage de précisions sur la réalisation de l'attache feuilletée ainsi que sur la structure du moyeu et le montage de l'attache feuilletée sur le moyeu.

On rappelle que l'attache feuilletée 15 comprend un élément feuilleté inférieur 15a, un élément feuilleté supérieur 15b et un élément feuilleté intercalaire 15c, qui sont disposés à l'aplomb les uns au-dessus des autres, de sorte que la portion d'extrémité 14a de la lame inférieure 13a est prise en sandwich entre les éléments feuilletés inférieur 15a et intercalaire 15c, et que la portion d'extrémité 14b de la lame supérieure 13b est prise en sandwich entre les éléments feuilletés intercalaire 15c et supérieur 15b. Chacun des éléments feuilletés 15a, 15b et 15c est constitué d'un empilement de plusieurs couches de tissu de fibres de carbone agglomérées par de la résine PEEK, et dont les directions des fils de chaîne et de trame sont orientées sensiblement à 45° par rapport à l'axe longitudinal de la lame 13a ou 13b, ou d'un empilement de plusieurs couches de nappes de fibres continues et unidirectionnelles de carbone agglomérées par de la résine PEEK, les nappes étant alternativement croisées les unes par rapport aux autres dans l'empilement, de sorte que la direction des fibres unidirectionnelles d'une nappe soit sensiblement perpendiculaire à la direction des fibres de la ou des nappes adjacentes, l'orientation des nappes de l'empilement étant telle que les fibres unidirectionnelles des différentes nappes s'étendent sensiblement à 45° par rapport à l'axe longitudinal du faisceau 13a ou 13b. Par exemple, chacun des éléments feuilletés inférieur 15a et supérieur 15b peut être constitué par l'empilement de neuf couches de tissu ou de seize nappes, ou encore, en variante, d'un empilement comprenant des couches de tissu et des couches de nappes. L'élément feuilleté intercalaire 15c est un empilement constitué des mêmes couches de tissu et/ou couches de nappes, mais dont l'épaisseur est double de celle des éléments feuilletés inférieur 15a et supérieur 15b, l'élément intercalaire 15c étant par exemple réalisé en superposant deux éléments feuilletés tels que les éléments inférieur 15a ou supérieur 15b.

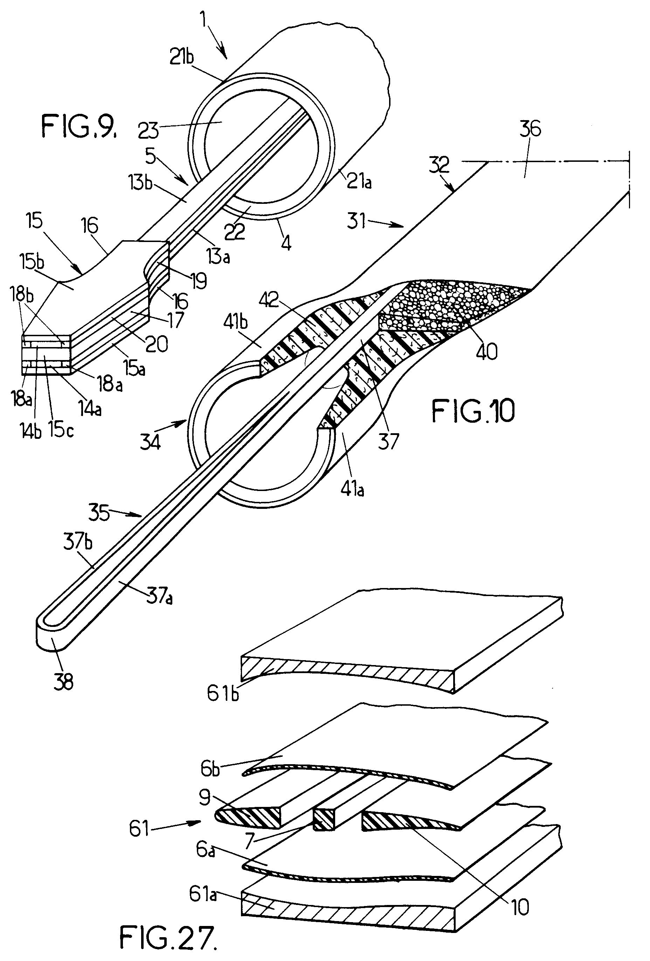

Comme représenté sur les figures 2 et 9, les trois éléments feuilletés 15a, 15b et 15c présentent, vus en plan, la même forme évasée latéralement des deux côtés des portions d'extrémité 14a et 14b, lesquelles sont de forme sensiblement rectangulaire dans le prolongement et à l'extrémité des lames 13a et 13b.

La forme évasée de chaque élément feuilleté 15a, 15b et 15c par rapport aux portions d'extrémité 14a et 14b est délimitée par les faces latérales de ces éléments, qui sont en saillie latérale par rapport aux portions d'extrémité 14a et 14b, et qui présentent, dans la partie de chaque élément feuilleté qui est tournée vers la coque 6, une zone concave 16, à concavité tournée latéralement d'un côté ou de l'autre de la pale et vers la coque 6, tandis que dans la partie d'extrémité des éléments feuilletés 15a, 15b et 15c qui est tournée du côté opposé à la coque 6, les faces latérales de ces éléments feuilletés présentent des zones planes 17 qui convergent l'une vers l'autre, en délimitant sur les éléments feuilletés une partie d'extrémité de forme sensiblement trapézoïdale.

Afin de combler l'espace délimité entre les parties en saillie par rapport aux portions d'extémité 14a et 14b, de deux éléments feuilletés 15a, 15b et 15c voisins, l'attache feuilletée 15 comprend également quatre éléments feuilletés de remplissage latéral, dont deux, 18a (voir figure 9) sont disposés chacun en appui contre l'une des faces latérales de la portion d'extrémité 14a, et en sandwich entre les parties latérales saillantes des éléments feuilletés inférieur 15a et intercalaire 15c, et dont les deux autres 18b sont disposés chacun en appui contre l'une des faces latérales de la portion d'extrémité 14b et pris en sandwich entre les parties latéralement saillantes des éléments feuilletés intercalaire 15c et supérieur 15b. Les éléments feuilletés de remplissage latéral 18a et 18b sont d'une structure feuilletée analogue à celle des autres éléments feuilletés 15a, 15b, 15c, donc en composite PEEK/carbone, et leur face latérale opposée à celle par laquelle ils sont chacun appliqués contre l'une des portions d'extrémité 14a et 14b présente également, comme les faces latérales des éléments feuilletés 15a, 15b et 15c, une zone concave 19, qui est dans le prolongement des zones concaves 16 des éléments feuilletés 15a, 15b et 15c, ainsi qu'une zone plane 20, qui est dans le prolongement des zones planes 17 des éléments feuilletés 15a, 15b, 15c, et qui est donc convergente avec la zone plane 20 de l'autre élément feuilleté de remplissage latéral 18a ou 18b correspondant.

La solidarisation de tous les éléments feuilletés 15a, 15b, 15c, 18a, 18b de l'attache feuilletée 15 aux portions d'extrémité 14a et 14b des deux lames 13a et 13b de la partie d'emplanture 5 est assurée par la rigidification de la résine PEEK, qui agglomère toutes les fibres de renfort en carbone, en couches de nappes de fibres unidirectionnelles ou de tissu, qui constituent les éléments feuilletés de l'attache 15 ainsi que les lames 13a et 13b et leurs portions d'extrémité 14a, 14b.

Afin de faciliter la réalisation du longeron 7, à partie d'emplanture 5 intégrée, l'unique écheveau composite du longeron 7 est formé de deux faisceaux de même nature, constitués chacun par une lame pultrudée comprenant plusieurs nappes superposées de fibres continues et unidirectionnelles de carbone orientées selon l'axe A-A de la pale, et agglomérées par la résine PEEK, les différentes nappes de fibres superposées de chaque lame pouvant être obtenues par superposition d'un nombre égal de mêmes longueurs découpées dans un ruban de composite PEEK/carbone, à fibres de carbone unidirectionnelles et longitudinales. Les deux lames pultrudées sont maintenues espacées l'une de l'autre sur une partie de leur longueur, qui forme la partie d'emplanture 5, grâce à l'attache feuilletée 15, dont elles sont solidaires par leur extrémité correspondante, tandis que sur le reste de leur longueur, ces deux lames pultrudées sont superposées, avec interposition de trois nappes de fibres de carbone unidirectionnelles et longitudinales agglomérées par la résine PEEK, pour constituer la partie du longeron 7 reçue dans la coque 6.

En service, les efforts centrifuges qui s'exercent sur la pale 1 sollicitent le longeron 7 longitudinalement, de sorte que son attache feuilletée 15 vient en butée, par les évidements concaves formés latéralement des deux côtés par les faces latérales 16 et 19 de ses éléments feuilletés, contre des douilles, dont une au moins est amovible pour permettre le démontage individuel de la pale, qui sont solidarisées sur le moyeu, et situées chacune sur l'un des côtés de la partie d'emplanture 5, en s'étendant dans une direction sensiblement perpendiculaire au plan de rotation de la pale, lequel est sensiblement parallèle aux grandes faces supérieure et inférieure des éléments feuilletés et des lames torsibles de la partie d'emplanture 5.

Le pied 4, représenté en coupe sur la figure 8, comprend deux demi-coquilles complémentaires 21a et 21b, dont chacune a la forme de la moitié d'un tube, de section variable, découpé axialement par un plan diamétral, et ces demi-coquilles 21a et 21b sont accolées l'une contre l'autre par leurs bords longitudinaux, de manière à reconstituer le tronçon de tube, et sont chacune constituée par un prolongement axial de l'un respectivement des deux revêtements 6a et 6b de la coque 6. Chaque demi-coquille 21a ou 21b est stratifiée et comprend non seulement les différentes couches de tissu et nappes de fibres agglomérées par la résine PEEK qui constituent le revêtement 6a ou 6b qu'elle prolonge, mais au moins une couche supplémentaire de renfort, localisée au niveau de ce prolongement, et qui est par exemple une couche de tissu PEEK/carbone, dont les directions des fils de chaîne et de trame sont l'une sensiblement parallèle et l'autre sensiblement perpendiculaire à l'axe longitudinal A-A de la pale, cette ou ces couches de renfort supplémentaires venant par-dessus les autres couches du revêtement.

Afin de rigidifier le pied 4 en lui donnant une épaisseur suffisante, ces demi-coquilles 21a et 21b sont intérieurement renforcées par une manchette 22 tubulaire. Cette manchette 22 présente un passage axial et central 23, qui est traversé par les deux lames 13a et 13b de la partie d'emplanture 5, à proximité et au niveau de leur subdivision à partir de la lame de longeron 7 dans la coque 6, et ce passage 23 est délimité par une surface latérale interne de forme générale sensiblement tronconique, à petite base tournée vers la coque 6. La manchette 22 présente de plus une surface latérale externe de forme générale également sensiblement tronconique, mais à grande base tournée vers la coque 6, donc à conicité inversée par rapport à celle du passage interne 23. La manchette 22, qui est entourée des demi-coquilles 21a et 21b dont la forme correspond à celle de la surface latérale externe de la manchette 22 contre laquelle elles sont appliquées, s'amincit de la sorte progressivement de son extrémité adjacente à la coque 6 jusqu'à son extrémité tournée vers l'attache feuilletée 15.

Les demi-coquilles 21a et 21b et la manchette interne de renfort 22 sont entourées et solidaires d'un palier d'encastrement et de rotation du pied 4 sur un moyeu, lequel palier est constitué par un manchon 24 de commande du pas de la pale. Ce manchon 24, non représenté sur la figure 9 mais visible sur les figures 1, 2 et 8, présente une forme générale sensiblement tronconique, à grande base tournée vers la coque 6, au niveau de ses surfaces latérales interne et externe. La conicité de son passage central correspond sensiblement à celle des demi-coquilles 21a et 21b et de la surface externe de la manchette 22. Pour permettre son articulation à un dispositif de commande collective du pas des pales d'un moyeu multi-pales à pas variable comprenant une pluralité de pales telle que la pale 1, le manchon 24 comporte, en saillie radiale vers l'extérieur, un levier de commande de pas 25. Ce levier 25 est percé d'une ouverture 26 pour le logement d'une articulation à rotule de liaison au dispositif de commande collective du pas, d'une manière décrite dans la demande conjointe précitée, ainsi que dans les brevets précités, auxquels on se reportera pour davantage de précisions sur ce montage et sur la structure du dispositif de commande collective de pas.

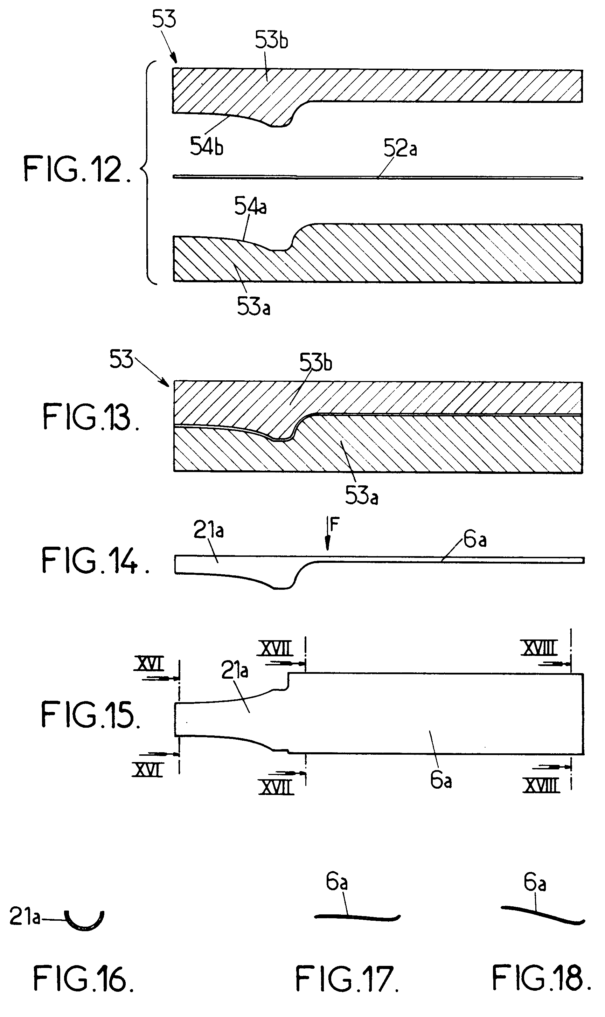

Ce manchon 24 peut être un manchon métallique, comme décrit en référence à la figure 14 du brevet FR-2 616 409 précité, et son montage peut correspondre à la représentation de la figure 16 du même brevet, le manchon métallique 24 étant alors rapporté par collage ou frettage sur le pied de la pale assemblée. De manière connue, le montage par frettage est assuré en chauffant le manchon 24, en l'emmanchant sur le pied de pale, puis en le refroidissant.

Mais, dans un exemple préféré de réalisation qui assure un gain de masse, le manchon 24, comme d'ailleurs la manchette interne de renfort 22, est une pièce moulée par injection en composite de fibres courtes de renfort en carbone, noyées dans la matrice PEEK, laquelle est chargée à 30 % environ en masse des fibres de renfort.

Enfin, le manchon 24 est solidaire et entouré, au niveau de chacune de ses extrémités axiales, d'une bague 27 ou 28, réalisée en métal ou en céramique, qui constitue une portée de rotation du manchon 24 sur le moyeu, ces bagues 27 et 28 étant solidarisées au manchon 24 par collage ou frettage.

La pale 1 est ainsi telle que tous ses composants, à l'exception des bagues 27 et 28 et, éventuellement, du manchon 24, sont réalisés en composite PEEK/carbone, l'assemblage des différents composants et la cohésion de la pale étant assurés par la résine PEEK.

Une variante de cette pale est représentée sur la figure 10. La pale 31 selon cette variante ne diffère essentiellement de celle des figures 1 à 9 que par la structure de sa partie d'emplanture 35, qui n'est plus munie d'une attache feuilletée, mais d'une partie d'emplanture 35 à boucle de liaison. Dans cette variante, le longeron 37 est également constitué d'un écheveau de fibres de renfort continues et unidirectionnelles de carbone, agglomérées par la résine PEEK, et qui présente deux parties parallèles et accolées l'une à l'autre, le long de l'axe longitudinal de la pale 31, pour constituer deux faisceaux de longeron accolés et reçus dans la coque 36 en partie courante ou profilée 32 de la pale 31. Ces faisceaux du longeron 37 sont reliés l'un à l'autre par une partie en boucle sensiblement aplatie, qui constitue la partie d'emplanture 35 proprement dite, et dont l'extrémité externe à la coque 36 est enroulée en boucle 38 et forme une attache en boucle de liaison au moyeu (non représenté) pour entourer une douille par laquelle la pale 31 est destinée à être individuellement rattachée de manière amovible au moyeu, par un boulon, de la manière décrite dans les brevets précités. Cette attache en boucle 38 est reliée au deux faisceaux du longeron 37 reçus dans la coque 36 par deux parties d'écheveau formant deux faisceaux d'attache torsibles 37a et 37b de la partie d'emplanture 35. Pour le reste de la structure de cette pale 31, on retrouve dans la coque 36 un corps de remplissage avant (non représenté) et un corps de remplissage arrière 40 qui sont des profilés pultrudés en composite PEEK/carbone à fibres longues et unidirectionnelles, la coque 36 est réalisée comme la coque 6 de la pale 1, le pied de pale 34, représenté sur la figure 10 sans le manchon de commande de pas et ses bagues de rotation, comprend également des demi-coquilles stratifiées 41a et 41b prolongeant les revêtements stratifiés d'intrados et d'extrados de la coque 36, avec au moins une couche supplémentaire de tissu de renfort PEEK/carbone, et une manchette de renfort interne 42, moulée par injection en composite PEEK/carbone à fibres courtes de renfort.

Le procédé de fabrication de la pale des figures 1 à 9 comprend une étape essentielle d'assemblage par fusion sous pression des composants en composite PEEK/carbone de la pale, après que ces composants aient été préfabriqués sous la forme de pièces élémentaires.

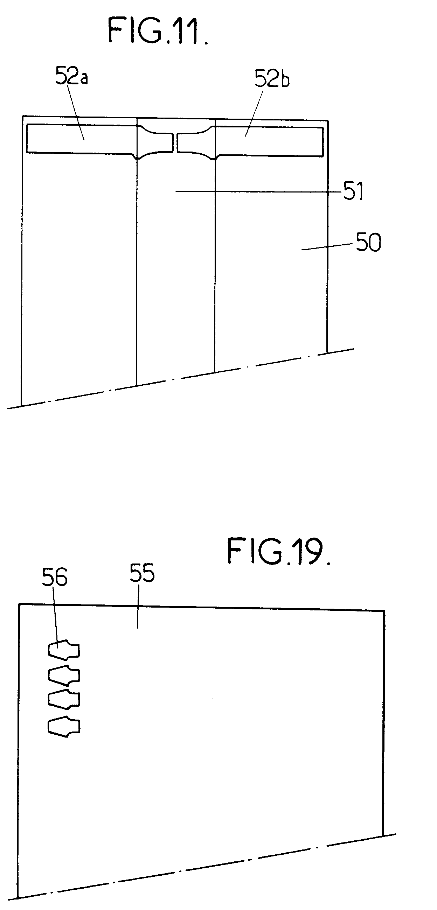

Pour réaliser chaque revêtement d'intrados ou d'extrados 6a ou 6b sous la forme d'une pièce élémentaire préfabriquée en composite PEEK/carbone, on commence par réaliser une plaque 50 (voir figure 11) constituée par la superposition d'autant de couches rectangulaires planes à l'état semi-rigide de fibres de carbone agglomérées par de la résine PEEK, que les revêtements 6a et 6b comprennent de couches, et de même nature, c'est-à-dire, pour l'exemple considéré, de deux couches de nappes de fibres continues et unidirectionnelles de carbone, orientées selon la largeur de la plaque 50, dont la direction correspond à la direction longitudinale ou envergure de la coque 6, et qui est supérieure à deux fois l'envergure de cette coque 6, et d'au moins une couche supérieure de tissu de fibres de carbone agglomérées par la résine PEEK et dont les directions des fils de trame et de chaîne sont inclinées à 45° par rapport à la largeur de la plaque 50. L'empilement comprend également au moins une bande de renfort 51, également à l'état semi-rigide, de tissu de fibres de carbone agglomérées par de la résine PEEK mais dont les directions des fils de chaîne et de trame sont orientées l'une selon la largeur et l'autre selon la longueur de la plaque 50, cette bande ou ces bandes 51 s'étendant longitudinalement au travers de la partie centrale de la plaque 50, laquelle partie centrale est destinée à former les prolongements en demi-coquilles 21a et 21b des revêtements 6a et 6b de la coque 6.

L'empilage de ces couches et bandes est chauffé à une température de fusion de la matrice PEEK, de l'ordre de 400°C, et mis sous une faible pression, de l'ordre de 0,1 à 0,5 MPa, dans un moule de compactage, pour assurer la liaison entre les différentes couches et bandes de fibres par la matrice PEEK. Puis l'empilement est refroidi et on obtient par solidification de la résine PEEK une plaque 50 précompactée, en composite PEEK/carbone à l'état sensiblement rigide, dans laquelle on découpe ensuite, par jet de fluide, des panneaux tels que 52a et 52b, disposés sensiblement bout à bout selon la largeur de la plaque 50, et tournés l'un vers l'autre par les prolongements destinés à former les demi-coquilles 21a et 21b du pied de pale, et chacun de ces panneaux 52a et 52b présentant la forme développée à plat respectivement du revêtement d'intrados 6a et d'extrados 6b.

Chaque panneau plat 52a ou 52b est ensuite conformé à la forme souhaitée du revêtement d'intrados 6a ou d'extrados 6b correspondant par estampage dans un moule d'estampage.

Ce procédé d'estampage est mis en oeuvre comme représenté sur les figures 12 et 13, dans un moule d'estampage comportant une partie de moule inférieure 53a, formant matrice, et une partie de moule supérieure 53b, formant poinçon, qui présentent chacune l'une respectivement de deux empreintes complémentaires 54a et 54b correspondant aux formes interne et externe du revêtement stratifié 6a ou 6b que ce moule d'estampage 53 permet de réaliser.

A titre d'exemple, le moule d'estampage 53 des figures 12 et 13 permet la mise en forme des revêtements d'intrados 6a. L'empreinte 54a interne à la partie de moule inférieure 53a correspond ainsi à la forme externe du revêtement d'intrados 6a, tandis que l'empreinte 54b interne à la partie de moule supérieure 53b correspond à la forme interne de ce même.revêtement d'intrados 6a. Sur la figure 12, entre les deux parties de moule 53a et 53b écartées l'une de l'autre, et maintenues chacune à une température inférieure à la température de fusion de la matrice PEEK, par exemple de l'ordre de 150°C, on dispose le panneau plat 52a ayant la même structure que le revêtement d'intrados 6a mais la forme de ce dernier telle que développée à plat. Ce panneau 52a est disposé dans le moule 53 après préchauffage à une température de l'ordre de 400°C, par exemple aux infra-rouges ou par passage dans un four tunnel à air chaud pulsé, puis les deux demi-moules 53a et 53b sont fermés, comme représenté sur la figure 13, pour assurer la mise en forme au profil souhaité du revêtement d'intrados 6a. Après refroidissement dans le moule 53 fermé, la matrice PEEK se solidarise, le moule 53 est ouvert et le revêtement d'intrados 6a peut être démoulé, comme représenté sur les figures 14 et 15. Les sections des figures 17 et 18 représentent l'évolution du vrillage de ce revêtement d'intrados 6a dans la partie courante 2 de la pale, et la section de la figure 16 montre la demi-coquille 21a formée dans le prolongement axial du revêtement d'intrados 6a.

Le revêtement d'extrados 6b est réalisé de la même manière par estampage d'un panneau 52b dans un moule d'estampage analogue au moule 53, et dont les empreintes des deux parties de moule correspondent respectivement à la forme externe et à la forme interne de ce revêtement d'extrados 6b.

La pièce élémentaire constituant la manchette 22 en composite PEEK/carbone est réalisée par moulage par injection.

Il est connu de mouler des pièces en thermoplastique renforcé de fibres par injection à partir d'un demi-produit sous forme de poudre ou de granulés sur une presse à injecter et selon un cycle de fabrication qui comporte cinq étapes principales : à savoir, la plastification de la matière, la fermeture du moule, le remplissage du moule sous pression, le refroidissement, et le démoulage de la pièce.

L'ensemble des dispositifs nécessaires à la mise en oeuvre de ces étapes étant connu, l'outillage de moulage par injection de la manchette 22 ne sera pas davantage décrit, car il ne présente aucune originalité, compte tenu de la géométrie simple de la manchette 22 (pièce tubulaire à surfaces latérales interne et externe généralement tronconiques, pouvant facilement être moulée d'une seule pièce ou en deux moitiés).

On indique cependant que la manchette 22 est moulée par injection d'un matériau composite à base de granulés de matrice PEEK dans laquelle sont noyées des fibres courtes de carbone. Ces granulés de composite thermoplastique PEEK/carbone sont des demi-produits disponibles, par exemple, sous les références commerciales 150CA30 ou 450CA30 auprès de la société britannique ICI ou de ses filiales. Il s'agit de granulés de 2 à 4 mm de longueur et de 1 à 3 mm de diamètre, de résine PEEK chargée à environ 30 % en masse de carbone en fibres courtes contenues à l'état sec dans la résine PEEK. Avant toute utilisation, ces granulés sont étuvés à une température d'environ 150°C pendant au moins trois heures. Puis ces granulés sont chauffés à une température de fusion de la matrice PEEK, de l'ordre de 400°C, et le matériau composite fluidifié par fusion de sa matrice est ensuite injecté dans le moule, maintenu à une température comprise entre environ 150°C et environ 200°C, mais de préférence voisine de 150°C. Après refroidissement et solidification de la résine PEEK, la manchette 22 peut être démoulée. Les caractéristiques mécaniques du matériau composite injectable à chaud ainsi constitué sont très satisfaisantes, puisque, dans des conditions d'utilisation à température ambiante de 23°C, par exemple, le module d'YOUNG en traction est de 24000 MPa, et la résistance à rupture en traction statique voisine de 200 MPa. On constate que ces valeurs sont du même ordre de grandeur que celles d'un tissu de verre équilibré, c'est-à-dire à même pourcentage de fibres dans les sens chaîne et trame, par exemple un tissu de verre de type E à 55 % de fibres en masse, dont le module d'YOUNG et la résistance en traction statique sont respectivement de l'ordre de 20000 MPa et 300 MPa. Le matériau composite PEEK/carbone résultant de l'injection à chaud à partir des granules décrits ci-dessus présente donc des caractéristiques remarquables pour un matériau injecté. A titre complémentaire, ces granulés contiennent 24 % en volume de fibres et 76 % en volume de résine PEEK, et leur masse volumique est de l'ordre de 1,41 à 1,44 kg/dm3. La matrice PEEK a elle-même une résistance à la traction de l'ordre de 90 à 100 MPa, un allongement à rupture de 70 %, un module d'YOUNG de l'ordre de 4000 MPa, une température de transition vitreuse de 143°C et une température de fusion de 390°C. Les fibres de renfort sont des fibres de carbone haute résistance de dénomination commerciale "XAS" de la société britannique COURTAULDS, d'une longueur de l'ordre de 0,1 à environ 0,5 mm. Le composite thermoplastique PEEK/carbone injectable ainsi obtenu possède de très bonnes caractéristiques mécaniques en statique, une bonne tenue thermique et aucune sensibilité au vieillissement humide accéléré.

Lorsque le manchon 24 n'est pas métallique mais en composite thermoplastique PEEK/carbone, la pièce élémentaire qui le constitue est réalisée, comme la manchette 22, par moulage par injection, dans un moule (non représenté car de forme très simple puisque correspondant à la forme tronconique du manchon 24) chauffé à une température de l'ordre de 150°C, d'un matériau composite à fibres courtes de carbone noyées dans une matrice PEEK en fusion, obtenu en chauffant à une température de l'ordre de 400°C des granulés tels que décrits ci-dessus.

La pièce élémentaire constituant chacun des corps de remplissage avant 9 et arrière 10 en composite PEEK/carbone est réalisée par pultrusion d'un profilé de fibres continues et unidirectionnelles de carbone agglomérées par la résine PEEK.

On sait que la pultrusion est un procédé de fabrication par extrusion par étirage qui est spécifique aux matériaux composites à matrice organique, et qui permet de réaliser en continu des profilés pleins ou creux et de section constante. Ce procédé est donc bien adapté à la réalisation des corps de remplissage avant 9 et arrière 10 de la pale 1 puisque la corde de cette dernière est sensiblement constante. Ce procédé consiste essentiellement à tirer des fibres continues de renfort, sous la forme de stratifils de carbone, à travers un bac d'imprégnation en résine, puis une filière chauffée, dans laquelle s'effectue la mise en forme par compactage du profilé pultrudé de résine PEEK enveloppant les stratifils de carbone. Ces profilés pultrudés peuvent présenter des taux élevés, de l'ordre de 40 à 60 %, de fibres de renfort en volume, et donc de bonnes performances mécaniques dans le sens longitudinal. La pultrusion permet également de mouler en continu des profilés en stratifiés, les profilés étant élaborés par étirage de nappes de fibres imprégnées à travers une filière. Au cours du passage dans la filière chauffée, les nappes sont compactées et forment, en sortie, un profilé aux dimensions précises et d'un bon aspect de surface. Ce procédé permet donc de réaliser des profilés pleins en résine PEEK et renfort en fibres continues et unidirectionnelles de carbone qui constituent les corps de remplissage avant 9 et arrière 10 de la pale. La ligne de pultrusion qui permet de réaliser ces profilés est classique, et n'est donc pas décrite en détail.

De tels profilés pultrudés, d'une excellente stabilité dimensionnelle, présentent une rigidité remarquable ainsi qu'une bonne absorption des vibrations lorsqu'ils sont soumis à des efforts de fatigue. Ces profilés pultrudés sont donc appropriés pour être utilisés comme corps de remplissage dans des pales très sollicitées mécaniquement et thermiquement pendant de longues durées de vie.

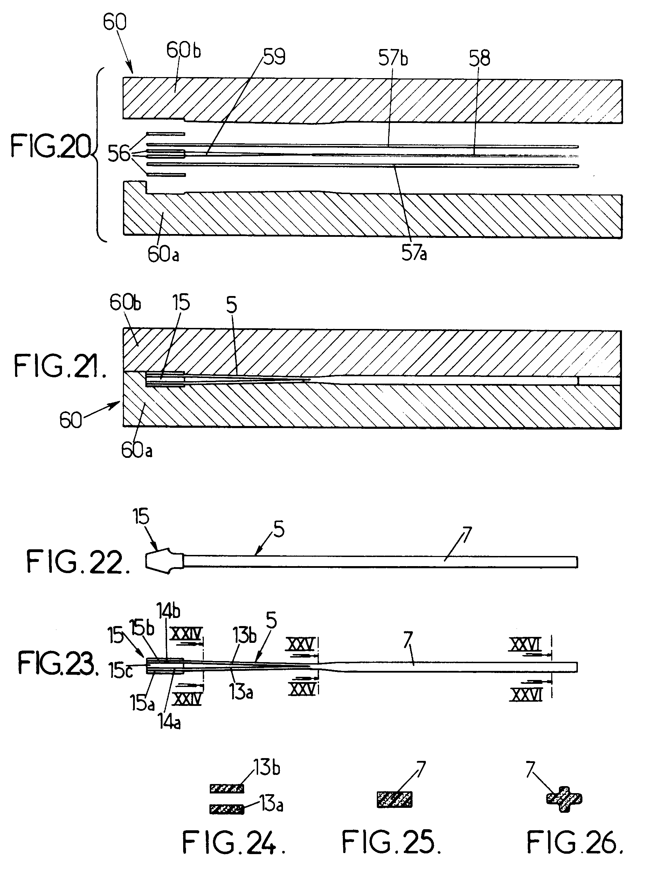

La pièce élémentaire en composite PEEK/carbone, qui constitue le longeron 7 avec partie d'emplanture 5 intégrée à attache feuilletée 15, est réalisée de la manière suivante. On réalise une plaque 55 (voir figure 19) en empilant par exemple seize couches rectangulaires à l'état rigide de nappes de fibres de carbone continues et unidirectionnelles agglomérées par la résine PEEK, les nappes étant croisées d'une couche à l'autre dans l'empilement de sorte que l'orientation des fibres d'une couche soit perpendiculaire à celle des fibres de la couche ou des couches voisines dans l'empilement, et que les orientations des fibres des différentes nappes soient sensiblement à ± 45° par rapport à la direction de la longueur ou de la largeur de la plaque 55. On compacte ensuite l'empilement dans un autoclave de compactage, dans lequel l'empilement est porté à une température de l'ordre de 400°C pour fondre la résine PEEK, et on le soumet à une pression de l'ordre de 0,1 à environ 0,5 MPa, exercée par une presse dans l'autoclave ou par la technique du "sac à vide", c'est-à-dire que l'empilement est disposé dans une vessie étanche en un film de polyimide, par exemple de dénomination commerciale UPILEX S, supportant la température de fusion de la matrice PEEK, cette vessie étant reliée à une source de dépression, qui permet de faire un vide relatif dans la vessie pour compacter l'empilement. Puis, après refroidissement et solidification de la résine PEEK qui solidarise toutes les couches de l'empilement, on obtient une plaque 55 précompactée, dans laquelle on découpe par jet de fluide des éléments feuilletés 56, dont chacun a une forme et une structure lui permettant de constituer l'élément feuilleté inférieur 15a ou supérieur 15b de l'attache feuilletée 15, tandis que deux éléments feuilletés 56 superposés sont nécessaires pour constituer l'élément feuilleté intercalaire 15c de cette attache feuilletée 15.

En variante, la plaque 55 peut être constituée par compactage de neuf couches de tissu de fibres de carbone agglomérées par la résine PEEK et dont les directions des fils de trame et de chaîne sont inclinées à ± 45° par rapport à la largeur ou la longueur de la plaque 55.

Les éléments feuilletés de remplissage latéral 18a et 18b de l'attache feuilletée 15 sont également découpés par jet de fluide dans la plaque 55, ou, si nécessaire, dans une autre plaque précompactée analogue et d'épaisseur appropriée.

Le longeron 7 proprement dit est essentiellement constitué de deux lames réalisées par pultrusion en fibres de carbone continues et unidirectionnelles agglomérées par la résine PEEK. Chaque lame est un profilé pultrudé, fabriqué de la même manière que les corps de remplissage avant 9 et arrière 10, par le procédé connu et à l'aide d'un dispositif connu, à partir de rubans ou nappes de fibres continues, unidirectionnelles et longitudinales de carbone agglomérées par de la résine PEEK, par passage dans une filière portée à une température de 400°C environ pour faire fondre la matrice PEEK. Chacune des deux lames pultrudées identiques 57a et 57b du longeron 7 est par exemple constituée d'un profilé pultrudé de seize nappes de telles fibres. Comme représenté sur la figure 20, les lames pultrudées 57a et 57b sont disposées dans un moule 60 de compactage du longeron 7 qui comprend une partie inférieure de moule 60a et une partie supérieure de moule 60b présentant chacune une empreinte interne ayant respectivement la forme de la partie inférieure et de la partie supérieure du longeron 7 fabriqué, sauf au niveau de l'attache feuilletée 15, pour laquelle l'empreinte correspondante est essentiellement ménagée dans la partie inférieure de moule 60a. Les lames 57a et 57b sont superposées, le long de la partie de leur longueur qui doit être reçue dans la coque 6, avec interposition entre elles de trois nappes 58, à l'état semi-rigide, de fibres continues et unidirectionnelles de carbone, orientées longitudinalement, et agglomérées par de la résine PEEK. Afin de maintenir écartées l'une de l'autre les parties de la longueur des deux lames 57a et 57b qui doivent constituer les lames torsibles 13a et 13b de la partie d'emplanture 5, un outillage en forme de coin en acier 59 est interposé entre ces parties des lames 57a et 57b. Puis chacune des portions d'extrémité de ces parties séparées des lames 57a et 57b, laquelle portion d'extrémité est destinée à former la portion d'extrémité de liaison 14a ou 14b de la lame torsible 13a ou 13b correspondante, est disposée en sandwich entre deux éléments feuilletés 56 préfabriqués, tels que découpés dans la plaque précompactée 55 de la figure 19. Les deux éléments feuilletés 56 ainsi directement superposés l'un à l'autre, entre les portions d'extrémité des parties écartées des deux lames 57a et 57b, sont disposés directement derrière le coin en acier 59, sur les faces duquel un démoulant en aérosol, par exemple du type connu sous la dénomination "FREKOTE", est vaporisé avant mise en place. Cette couche de démoulant a pour effet de faciliter le retrait de l'outillage amovible constitué par le coin en acier 59 après le compactage du longeron. Ce compactage est assuré par fermeture du moule, comme représenté sur la figure 21, alors que tous les éléments composites contenus dans le moule sont échauffés à une température de l'ordre de 400°C pour assurer la mise en fusion de la matrice PEEK, et que ces composants sont simultanément soumis à une pression de l'ordre de 0,6 MPa. Les trois nappes de fibres unidirectionnelles 58, qui sont disposées en regard de l'extrémité du coin amovible 59, et qui sont intégrées dans le longeron 7 par l'opération de compactage, ont pour rôle d'éviter toute déformation en épaisseur des lames 57a et 57b du longeron, au niveau de l'extrémité du coin métallique 59, du fait que cette extrémité ne peut être d'une épaisseur rigoureusement nulle. Ainsi, la matrice PEEK assure la solidarisation des quatre éléments feuilletés 56 aux extrémités des parties écartées des deux lames 57a et 57b du longeron, ainsi que la solidarisation des deux éléments feuilletés 56 directement superposés pour constituer l'élément feuilleté intercalaire 15c de l'attache feuilletée 15, et également la solidarisation entre elles des parties superposées des deux lames 57a et 57b et des trois nappes intercalaires de fibres 58. Après refroidissement et solidification de la résine PEEK, le moule 60 est ouvert et le longeron 7 compacté et fabriqué d'une seule pièce est démoulé et présente la structure représentée sur les figures 22 et 23 et telle que déjà décrite ci-dessus. En particulier, chacune des deux lames pultrudées 57a et 57b du longeron 7 constitue, d'une part, un faisceau de longeron reçu dans la coque 6 et solidaire du faisceau correspondant de l'autre lame, et, d'autre part, un faisceau d'attache de pale 13a ou 13b, relié à l'autre par sa portion d'extrémité de liaison 14a ou 14b par l'intermédiaire de l'attache feuilletée commune 15.

Tous les composants en composite thermoplastique PEEK/carbone de la pale 1 ayant été réalisés sous la forme de pièces élémentaires préfabriquées, ces composants, à l'exception du manchon de commande de pas 24, sont disposés dans un moule d'assemblage par fusion sous pression de la pale, schématiquement représenté sur la figure 27, ce moule 61 comprenant une partie de moule inférieure 61a et une partie de moule supérieure 61b qui comportent des empreintes internes complémentaires présentant, respectivement, la forme de la partie d'intrados et de la partie d'extrados de la pale, les pièces élémentaires préfabriquées étant disposées dans ce moule de sorte qu'elles occupent dans ce dernier les positions respectives qu'elles occupent dans la pale 1. Cette opération consiste essentiellement à disposer d'abord le revêtement d'intrados 6a dans la partie de moule inférieure 61a, puis à disposer sur le revêtement d'intrados 6a les corps de remplissage avant 9 et arrière 10 de part et d'autre du longeron 7, avec mise en place de la manchette de renfort interne 22, en une seule pièce ou en deux pièces complémentaires, autour de la partie d'emplanture 5, qui, avec l'attache feuilletée 15, sont de préférence positionnées dans ce moule par un outillage de positionnement qui les entoure et remplit notamment le passage interne 23 de la manchette 22, autour des lames 13a et 13b qui la traverse. Les pièces élémentaires préfabriquées ainsi disposées sont chauffées à une température de l'ordre de 400°C, pour faire fondre la matrice PEEK, et le moule 61 est fermé pour exercer sur ces pièces une pression suffisante afin d'assurer la continuité de la matrice PEEK entre les différentes pièces et leur assemblage par fusion sous pression, en une seule opération, une pression convenable pouvant être de l'ordre de 1 MPa. Le refroidissement du moule et de son contenu assure ensuite la solidification de la matrice PEEK et la rigidification de l'ensemble des pièces élémentaires ainsi assemblées, et la pale ainsi obtenue peut être ensuite démoulée par ouverture du moule. Pour terminer la fabrication de la pale, les bagues métalliques ou céramiques 27 et 28 sont rapportées par collage ou frettage sur le manchon 24, et ce dernier, s'il est métallique, est lui-même ensuite rapporté par collage ou frettage autour des demi-coquilles 21a et 21b et de la manchette de renfort interne 22 du pied de pale 4.

Si le manchon 24 est lui-même une pièce moulée par injection en composite thermoplastique PEEK/carbone, il peut éventuellement être assemblé aux autres composants en composite PEEK/carbone de la pale lors de l'opération de moulage, sous réserve d'aménager les empreintes du moule en conséquence.

De même, une coiffe de protection du bord d'attaque, en titane ou acier inoxydable par exemple, peut être rapportée par collage sur la pale après démoulage, ou solidarisée à la pale au cours du moulage, en même temps que l'assemblage de tous les éléments composites de la pale, si les empreintes du moule sont aménagées en conséquence et que la coiffe est mise en place dans le moule avant sa fermeture en position appropriée par rapport aux autres éléments qu'il contient,

Le procédé de fabrication de la variante de pale représentée sur la figure 10 ne diffère de celui qui vient d'être décrit que par l'étape de réalisation de la pièce élémentaire préfabriquée destinée à constituer le longeron 37 ayant une partie d'emplanture 35 à attache de liaison en boucle 38. Un tel longeron 37 peut être réalisé selon le procédé décrit en référence à la figure 9 du brevet français 2 616 409 précité qui est appliqué à d'autres matériaux. Selon ce procédé, cette pièce élémentaire est réalisée par enroulement d'un ruban de fibres de carbone continues, unidirectionnelles et longitudinales agglomérées par de la résine PEEK, en plusieurs couches et sous tension mécanique autour de deux bobines, d'axes parallèles mais espacées l'une de l'autre d'une distance supérieure à l'envergure de la pale. La tension mécanique à l'enroulement peut être obtenue en soumettant l'une des deux bobines à une traction qui tend à l'écarter de l'autre au cours de l'enroulement du ruban. On obtient ainsi un écheveau enroulé en boucle allongée et fermée, qui est mis en forme par compactage sous pression et à une température de fusion de la matrice PEEK, de l'ordre de 400°C, dans un moule comportant un noyau pour maintenir écartées les deux parties de l'écheveau destinées à constituer les deux faisceaux d'attache 37a et 37b reliés l'un à l'autre par l'extrémité en boucle 38 du longeron 37. Après solidification de la matrice PEEK par refroidissement du moule de compactage et de son contenu, la partie d'extrémité de l'enroulement située du côté opposé à l'attache en boucle 38 est découpée, pour ramener la longueur du longeron 37 ainsi obtenu à la longueur souhaitée selon l'envergure de la pale.

Le longeron 37 ainsi réalisé sous forme de pièce élémentaire préfabriquée est ensuite mis en place avec les autres composants préfabriqués en composite PEEK/carbone de la pale dans un moule d'assemblage final par fusion sous pression, comme décrit ci-dessus pour la pale des figures 1 et 9. Dans cet exemple également, les bagues du pied de pale, ainsi, éventuellement, que le manchon de commande de pas sont montés sur la pale par collage ou frettage, après le moulage de cette dernière.

Un autre avantage de la pale et du procédé de l'invention est que le moulage d'un thermoplastique est obtenu sans salissure du moule. Il n'est donc pas nécessaire de déposer une couche de colle dans le moule pour obtenir un état "fini" des revêtements de la pale, comme cela est le cas lors du moulage de composite thermodurcissable des pales de l'état de la technique.

## Revendications

1. Pale essentiellement en matériau composite, pour rotor de giravion, et comprenant :
- une coque rigide (6,36) composite, à profil aérodynamique, allongée longitudinalement selon l'envergure de la pale (1,31) et dont une extrémité longitudinale, destinée à être tournée vers un moyeu du rotor, présente un pied de pale (4,34), ladite coque (6,36) comportant au moins une couche de fibres de renfort agglomérées par une matrice en une résine synthétique de rigidification,
- au moins un longeron (7,37) dont au moins une partie est logée sensiblement longitudinalement dans la coque (6,36), et comportant au moins un faisceau composite allongé, de fibres de renfort continues et unidirectionnelles agglomérées par une matrice en une résine synthétique de rigidification, et
- au moins un corps de remplissage (9,10;40) disposé dans la coque (6,36) entre cette dernière et au moins un longeron (7,37), et comportant également des fibres de renfort agglomérées par une matrice en une résine synthétique de rigidification, caractérisée en ce que la résine des matrices de la coque (6,36), de chaque corps de remplissage (9,10;40) et de chaque faisceau de chaque longeron (7,37) est une résine thermoplastique, assurant l'assemblage et la cohésion entre eux de la coque (6,36) et de la partie de chaque longeron (7, 37) logée dans la coque (6,36),
ladite résine thermoplastique assurant également l'assemblage et la cohésion entre chaque corps de remplissage (9, 10 ; 40), et ladite coque (6, 36) et ladite partie de chaque longeron (7, 37).

2. Pale selon la revendication 1, caractérisée en ce que la résine thermoplastique est une résine de poly-ether-ether-cetone (PEEK) et les fibres de renfort sont choisies parmi les fibres de carbone et de verre.

3. Pale selon la revendication 2, caractérisée en ce que les fibres de renfort de la coque (6,36), de chaque corps de remplissage composite (9,10;40) et de chaque faisceau composite de chaque longeron (7,37) sont de même nature, et sont de préférence en carbone.

4. Pale selon l'une des revendications 1 à 3, caractérisée en ce que chaque corps de remplissage (9,10;40) de la pale (1,31) est composite et constitué de fibres de renfort continues et sensiblement unidirectionnelles agglomérées par ladite résine thermoplastique.

5. Pale selon l'une des revendications 1 à 4, dont le pied de pale (4,34) est tubulaire et prolonge la coque (6,36) sensiblement axialement, caractérisée en ce que le pied de pale (4,34) est, au moins en partie, constitué de deux demi-coquilles complémentaires (21a,21b;41a,41b), dont chacune est constituée par un prolongement de l'un respectivement de deux revêtements stratifiés (6a,6b) formant les revêtements d'intrados et d'extrados de la pale.

6. Pale selon l'une des revendications 1 à 5, pour rotor multi-pales, à pales démontables individuellement, utilisable comme rotor arrière, en particulier caréné, d'hélicoptère, et du type qui comporte une partie d'emplanture (5,35) de pale (1,31) comprenant au moins un faisceau d'attache (13a,13b;37a,37b) de pale qui est allongé, composite, et torsible autour de son axe longitudinal, et qui prolonge, à l'extérieur de la coque (6, 36) en traversant le pied de pale tubulaire (4,34) au moins un faisceau composite d'au moins un longeron (7,37) d'axe longitudinal sensiblement parallèle à celui (A) de la pale (1,31), l'extrémité de chaque faisceau d'attache (13a,13b; 37a,37b), du côté opposé à la coque (6,36), étant aménagée en attache de liaison à un moyeu de rotor, caractérisée en ce que chaque faisceau d'attache (13a,13b;37a,37b) de la partie d'emplanture (5,35) est d'une seule pièce avec le faisceau composite du longeron (7,37), et constitué des mêmes fibres de renfort agglomérées par la même résine thermoplastique.

7. Pale selon la revendication 6, caractérisée en ce que au moins un longeron (37) est constitué d'un écheveau de fibres de renfort continues et unidirectionnelles, agglomérées par ladite résine thermoplastique, et qui présente deux parties sensiblement parallèles l'une à l'autre et à l'axe longitudinal de la pale, qui constituent deux faisceaux de longeron (37) reçus dans la coque (36), et reliés l'un à l'autre par une partie en bouche sensiblement aplatie, qui constitue la partie d'emplanture (35), dont l'extrémité enroulée en bouche forme une attache en bouche (38) de liaison au moyeu, pour entourer une douille par laquelle la pale (31) est destinée à être individuellement rattachée, de manière amovible, au moyeu par un boulon, ladite attache en bouche étant reliée auxdits faisceaux de longeron (37) reçus dans la coque (36) par deux parties d'écheveau formant deux faisceaux d'attache torsibles (37a,37b) de la partie d'emplanture (35).

8. Pale selon la revendication 6, caractérisée en ce que l'attache de liaison au moyeu d'au moins un faisceau d'attache (13a,13b) est une attache feuilletée (15), comprenant au moins deux éléments feuilletés (15a,15b,15c) entre lesquels une portion d'extrémité de liaison (14a,14b) du faisceau d'attache (13a,13b), du côté opposé à la coque (6), est prise en sandwich et solidarisée, chaque élément feuilleté (15a,15b,15c) comprenant un empilement d'au moins deux couches des mêmes fibres de renfort que celles du faisceau d'attache (13a,13b), agglomérées par ladite résine thermoplastique, qui solidarise lesdits éléments feuilletés (15a,15b,15c) à ladite portion d'extrémité de liaison (14a, 14b), l'attache feuilletée (15) étant conformée pour venir en butée, vers la coque (6), contre des moyens amovibles de retenue de l'attache feuilletée (15) et de la pale (1) au moyeu.

9. Pale selon la revendication 8, caractérisée en ce que chaque faisceau d'attache (13a,13b) comprend au moins une lame pultrudée (57a,57b) de fibres continues et unidirectionnelles dans ladite résine thermoplastique, lesdites fibres étant orientées sensiblement selon l'axe longitudinal du faisceau d'attache (13a,13b), et chaque élément feuilleté (15a,15b,15c) de l'attache feuilletée (15) comprend un empilage de plusieurs couches de nappes croisées de fibres continues et unidirectionnelles et/ou couches de tissus de fibres, de sorte que les directions des fibres soient sensiblement à 45° par rapport à l'axe longitudinal du faisceau d'attache (13a,13b).

10. Pale selon l'une des revendications 6 à 9, pour rotor multi-pales dont les pales sont de plus à pas variable, et du type dont le pied de pale (4) comporte un palier d'encastrement et de rotation du pied de pale sur un moyeu, ledit palier comprenant un manchon (24) de pied de pale qui comporte, en saillie radiale vers l'extérieur, un levier (25) de commande du pas, destiné à être articulé à un dispositif de commande collective du pas des pales (1) du rotor, caractérisée en ce que le manchon (24) est un manchon tubulaire moulé en composite de fibres courtes de renfort, en verre ou carbone, noyées dans la même matrice thermoplastique que les autres composants composites de la pale (1).

11. Pale selon la revendication 10, caractérisée en ce que le pied de pale (4) comporte également une manchette de renfort interne (22), également moulée en composite de fibres courtes de renfort, en verre ou carbone, noyées dans la même résine thermoplastique.

12. Procédé de fabrication d'une pale selon l'une des revendications 1 à 11, dont la coque (6,36) composite est constituée d'un revêtement d'intrados (6a) et d'un revêtement d'extrados (6b) stratifiés, comprenant les étapes suivantes, consistant :
- à réaliser chacun des revêtements stratifiés (6a, 6b) et longerons (7, 37) en composite thermoplastique de la pale (1,31) sous la forme d'une pièce élémentaire préfabriquée,
- à disposer les pièces élémentaires préfabriquées dans un moule (61) d'assemblage sous pression, comprenant une partie de moule inférieure (61a) et une partie de moule supérieure (61b) comportant des empreintes internes complémentaires, présentant respectivement la forme de la partie d'intrados et de la partie d'extrados de la pale (1,31), de sorte que lesdites pièces élémentaires préfabriquées occupent dans le moule (61) les positions respectives qu'elles occupent dans la pale (1,31),
- à fermer le moule (61) et à assurer l'assemblage par fusion desdites pièces élémentaires préfabriquées disposées dans le moule (61),
- à refroidir le moule (61), pour assurer la solidification de la matrice thermoplastique et la rigidification de l'ensemble des pièces élémentaires ainsi assemblées,
- à démouler la pale (1,31) ainsi obtenue,
- à réaliser également chacun des corps de remplissage (9, 10 ; 40) en composite thermoplastique de la pale (1, 31) sous la forme d'une pièce élémentaire préfabriquée, et à la disposer dans le moule (61),
- à utiliser un moule (61) d'assemblage sous pression par chauffage,
- après fermeture du moule (61), à chauffer lesdites pièces à une température suffisante pour fondre la matrice thermoplastique, sous une pression suffisante pour assurer la continuité de la matrice thermoplastique entre lesdites pièces et leur assemblage par fusion sous pression, et
- après démoulage de la pale (1,31), à rapporter des bagues (27,28), par collage ou par frettage, autour d'un manchon (24) de pied de pale, lui-même rapporté, par collage ou frettage, autour dudit pied de pale (4,34) s'il n'est pas en composite thermoplastique et déjà assemblé par fusion sous pression aux autres pièces élémentaires préfabriquées de la pale (1,31).

13. Procédé selon la revendication 12, caractérisé en ce qu'il comprend de plus l'étape consistant à réaliser la pièce élémentaire constituant chaque corps de remplissage (9,10;40) par pultrusion d'un profilé de fibres continues et unidirectionnelles, de préférence en carbone, agglomérées dans une matrice thermoplastique, de préférence poly-ether-ether-cetone (PEEK).

14. Procédé selon l'une des revendications 12 et 13, caractérisé en ce qu'il comprend plus l'étape consistant à réaliser la pièce élémentaire constituant un revêtement stratifié d'intrados (6a) ou d'extrados (6b) de la coque (6) par mise en forme par estampage, entre deux parties (53a, 53b) de moule (53) maintenues à une température inférieure à la température de fusion de la matrice, et présentant des empreintes complémentaires (54a,54b) correspondant à la forme du revêtement stratifié considéré (6a,6b), d'un panneau (52a) préchauffé à une température de fusion de la matrice, ayant la forme développée à plat du revêtement stratifié considéré (6a,6b), et découpé dans une plaque précompactée (50), obtenue par empilage de plusieurs couches de tissus et/ou de nappes de fibres continues et unidirectionnelles de renfort agglomérées par la matrice, sous pression et à une température de fusion de la matrice, puis rigidification en plaque par solidification de la matrice par refroidissement.

15. Procédé selon l'une des revendications 12 à 14, pour fabriquer une pale (1), dont le pied de pale (4) est équipé d'un manchon (24) de commande de pas, également en composite à matrice thermoplastique, caractérisé en ce qu'il comprend de plus l'étape consistant à réaliser la pièce élémentaire constituant le manchon (24) par moulage par injection, dans un moule chauffé à une température inférieure à la température de fusion de la matrice, d'un matériau composite constitué de fibres courtes de renfort, de préférence en carbone, noyées dans une matrice thermoplastique en fusion, de préférence une matrice poly-ether-ether-cetone (PEEK).

16. Procédé selon l'une des revendications 12 à 15, pour fabriquer une pale (1), dont le pied de pale tubulaire (4) est renforcé par une manchette de renfort interne (22), également en composite à matrice thermoplastique, caractérisé en ce qu'il comprend de plus l'étape consistant à réaliser la pièce élémentaire constituant la manchette (22) par moulage par injection, dans un moule chauffé à une température inférieure à la température de fusion de la matrice, d'un matériau composite constitué de fibres de renfort courtes, de préférence en carbone, noyées dans une matrice thermoplastique en fusion, de préférence une matrice PEEK.

17. Procédé selon l'une des revendications 12 à 16, pour fabriquer une pale (31), ayant au moins un longeron (37) en composite thermoplastique, dont une partie externe à la coque (36) constitue une partie d'emplanture (35) de pale à deux faisceaux d'attache (37a,37b) formant une attache en bouche (38) de liaison au moyeu et prolongeant au moins un faisceau de longeron (37) logé dans la coque (36), caractérisé en ce qu'il comprend de plus l'étape consistant à réaliser la pièce élémentaire constituant ledit longeron (37) par enroulement d'un ruban de fibres de renfort continues et unidirectionnelles agglomérées par ladite matrice thermoplastique, en plusieurs couches et sous tension mécanique autour de deux bobines, puis par mise en forme dans un moule par compactage de l'enroulement sous pression et à une température de fusion de la matrice, suivi d'un refroidissement de solidification de la matrice, et d'une découpe d'une partie d'extrémité de l'enroulement du côté opposé à l'attache en bouche (38).

18. Procédé selon l'une des revendications 12 à 16, pour fabriquer une pale (1) ayant au moins un longeron (7) en composite thermoplastique, dont une partie externe à la coque (6) constitue une partie d'emplanture (5) de pale à au moins un faisceau d'attache (13a,13b), dont une portion (14a,14b) d'extrémité de liaison au moyeu est munie d'une attache feuilletée (15), également en composite thermoplastique, et prolongeant un faisceau de longeron (7) logé dans la coque (6), caractérisé en ce qu'il comprend de plus l'étape consistant à réaliser la pièce élémentaire constituant le longeron (7) en réalisant chaque faisceau d'attache (13a,13b) et le faisceau de longeron (7) qu'il prolonge sous la forme d'une lame (57a,57b) de fibres de renfort continues et unidirectionnelles agglomérées par ladite matrice thermoplastique, obtenue par pultrusion à une température de fusion de la matrice, de plusieurs nappes de fibres continues et unidirectionnelles agglomérées par cette matrice, et, si ladite partie d'emplanture comprend au moins deux faisceaux d'attache (13a,13b), dont chacun prolonge respectivement un faisceau de longeron (7), à superposer des parties des lames (57a,57b) correspondantes destinées à former la partie de longeron (7) logée dans la coque (6), avec interposition d'au moins une nappe (58) des fibres continues et unidirectionnelles agglomérées par ladite matrice entre des parties superposées de lames (57a,57b) adjacentes, et à mettre en place un outillage amovible (59), en forme de coin, entre des parties à maintenir espacées l'une de l'autre de deux lames voisines (57a,57b), pour former deux faisceaux d'attache (13a,13b) de la partie d'emplanture (5), puis à disposer la ou les lames (57a,57b) dans un moule (60), et à intercaler chaque portion d'extrémité de liaison (14a,14b) d'une lame pultrudée (57a, 57b) entre deux éléments feuilletés (56) de l'attache (15), de façon à superposer tous les éléments feuilletés (56) de ladite attache (15), à fermer le moule (60) et à compacter son contenu sous pression et à une température de fusion de ladite matrice thermoplastique, à solidifier ensuite la matrice par refroidissement pour rigidifier le longeron (7) ainsi obtenu avec l'attache feuilletée solidarisée à sa partie d'emplanture (5).

19. Procédé selon la revendication 18, caractérisé en ce qu'il consiste de plus à réaliser chaque élément feuilleté (56) de l'attache feuilletée (15) en composite thermoplastique en empilant plusieurs couches de tissu et/ou de nappes de fibres continues et unidirectionnelles agglomérées par ladite matrice thermoplastique, en compactant l'empilage ainsi obtenu sous pression et à une température de fusion de la matrice, en solidifiant la matrice par refroidissement pour obtenir une plaque compactée (55), et en découpant ledit élément feuilleté (56) dans ladite plaque compactée (55).

## Claims

1. Blade, essentially made of composite material, for rotorcraft rotor, and comprising:
- a composite rigid shell (6, 36), with aerodynamic profile, elongated longitudinally along the span of the blade, (1, 31), one longitudinal end of which, intended to be turned towards a hub of the rotor, has a blade root (4, 34), the said shell (6, 36) including at least one layer of reinforcing fibres agglomerated by a matrix made of a synthetic rigidifying resin,
- at least one spar (7, 37), at least one part of which is housed substantially longitudinally in the shell (6, 36), including at least one elongate composite bundle of continuous and unidirectional reinforcing fibres agglomerated by a matrix made of a synthetic rigidifying resin, and
- at least one filling body (9, 10; 40) arranged in the shell (6, 36) between the latter and at least one spar (7, 37), and also including reinforcing fibres agglomerated by a matrix made of a synthetic rigidifying resin,
characterized in that the resin of the matrices of the shell (6, 36), of each filling body (9, 10; 40) and of each bundle of each spar (7, 37) is a thermoplastic resin, which assembles together and provides cohesion between the shell (6, 36), and the part of each spar (7, 37) housed in the shell (6, 36), said thermoplastic resin also assembling together and providing cohesion between each filling body (9, 10; 40), and said shell (6, 36) and said part of each spar (7, 37).

2. Blade according to Claim 1, characterized in that the thermoplastic resin is a polyetheretherketone (PEEK) resin, and the reinforcing fibres are chosen from carbon and glass fibres.

3. Blade according to Claim 2, characterized in that the reinforcing fibres of the shell (6, 36), of each composite filling body (9, 10; 40) and of each composite bundle of each spar (7, 37) are of the same nature, and are preferably made of carbon.

4. Blade according to one of Claims 1 to 3, characterized in that each filling body (9, 10; 40) of the blade (1, 31) is composite and consists of continuous and substantially undirectional reinforcing fibres which are agglomerated by the said thermoplastic resin.

5. Blade according to one of Claims 1 to 4, in which the blade root (4, 34) is tubular and extends the shell (6, 36) substantially axially, characterized in that the blade root (4, 34) consists, at least in part of two complementary half-casings (21a, 21b; 41a, 41b), each of which consists of an extension of one of two laminated skins (6a, 6b) respectively, which form the lower-surface and upper-surface skins of the blade.

6. Blade according to one of Claims 1 to 5, for a multiblade rotor with individually dismountable blades, which can be used as a tail rotor, in particular a ducted tail rotor, for a helicopter, and of the type which includes a blade (1, 31) rooting part (5, 35) comprising at least one blade attachment bundle (13a, 13b; 37a, 37b) which is elongate, composite, and twistable about its longitudinal axis, and which extends, outside the shell (6, 36) by passing through the tubular blade root (4, 34), at least one composite bundle of at least one spar (7, 37) of longitudinal axis substantially parallel to that (A) of the blade (1, 31), the end of each attachment bundle (13a, 13b; 37a, 37b), on the side opposite the shell (6, 36), being arranged in linkage attachment to a rotor hub, characterized in that each attachment bundle (13a, 13b; 37a, 37b) of the rooting part (5, 35) is made integrally with the composite bundle of the spar (7, 37) and consists of the same reinforcing fibres agglomerated by the same thermoplastic resin.

7. Blade according to Claim 6, characterized in that at least one spar (37) consists of a hank of continuous and unidirectional reinforcing fibres which are agglomerated by the said thermoplastic resin, which has two parts substantially parallel to each other and to the longitudinal axis of the blade, which constitute two spar bundles (37) received in the shell (36) and joined to each other by a substantially flattened loop part which constitutes the rooting part (35), of which the end rolled into a loop forms a loop attachment (38) for linkage to the hub, to surround a bush by which the blade (31) is intended to be individually and removably attached to the hub by a bolt, the said loop attachment being connected to the said spar bundles (37) received in the shell (36) by two hank parts forming two attachment torsion bundles (37a, 37b) of the rooting part (35).

8. Blade according to Claim 6, characterized in that the attachment for linking at least one attachment bundle (13a, 13b) to the hub is a laminate attachment (15), comprising at least two laminate elements (15a, 15b, 15c) between which an end linkage portion (14a, 14b) of the attachment bundle (13a, 13b), on the side opposite the shell (6), is sandwiched and solidly attached, each laminate element (15a, 15b, 15c) comprising a stack of at least two layers of the same reinforcing fibres as those of the attachment bundle (13a, 13b), which are agglomerated by the said thermoplastic resin which solidly attaches the said laminate elements (15a, 15b, 15c) to the said end linkage portion (14a, 14b), the laminate attachment (15) being shaped so as to abut, towards the shell (6), against removable means for holding the laminate attachment (15) and the blade (1) to the hub.

9. Blade according to Claim 8, characterized in that each attachment bundle (13a, 13b) comprises at least one pultruded sheet (57a, 57b) of continuous and unidirectional fibres in the said thermoplastic resin, the said fibres being oriented substantially along the longitudinal axis of the attachment bundle (13a, 13b), and each laminate element (15a, 15b, 15c) of the laminate attachment (15) comprises a stack of several layers of crossed plies of continuous and unidirectional fibres and/or layers of fibre fabric, such that the directions of the fibres are substantially at 45° with respect to the longitudinal axis of the attachment bundle (13a, 13b).

10. Blade according to one of Claims 6 to 9, for a multiblade rotor in which the blades furthermore have variable pitch, and of the type in which the blade root (4) includes a bearing for clamping and rotation of the blade root on a hub, the said bearing comprising a blade root cuff (24) which includes, projecting radially outwards, a pitch control lever (25) intended to be articulated to a device for collective control of the pitch of the blades (1) of the rotor, characterized in that the cuff (24) is a tubular cuff moulded from a composite of short reinforcing glass or carbon fibres which are embedded in the same thermoplastic matrix as the other composite components of the blade (1).

11. Blade according to Claim 10, characterized in that the blade root (4) also includes an internal reinforcing collar (22) also moulded from a composite of short reinforcing glass or carbon fibres embedded in the same thermoplastic resin.

12. Method for manufacturing a blade according to one of Claims 1 to 11, in which the composite shell (6, 36) consists of a lower-surface skin (6a) and of an upper-surface skin (6b) which are laminated, comprising the following steps, consisting:
- in producing each of the thermoplastic composite spars (7, 37) and laminated skins (6a, 6b) of the blade (1, 31) in the form of a prefabricated elementary piece,
- in arranging the prefabricated elementary pieces in a mould (61) for assembly under pressure, comprising a lower mould part (61a) and an upper mould part (61b) including complementary internal impressions, having respectively the shape of the lower-surface part and of the upper-surface part of the blade (1, 31), such that the said prefabricated elementary pieces occupy, in the mould (61), the respective positions which they occupy in the blade (1, 31),
- in closing the mould (61) and in assembling said prefabricated elementary pieces arranged in the mould (61) by melting,
- in cooling the mould (61), to solidify the thermoplastic matrix and rigidify all the elementary pieces thus assembled,
- in releasing the blade (1, 31) thus obtained from the mould,
- in also producing each thermoplastic composite filling body (9, 10; 40) of the blade (1, 31) in the form of a prefabricated elementary piece and in arranging it in the mould (61),
- in using a mould (61) for assembly under pressure by heating,
- after closure of the mould (61), in heating the said pieces to a temperature sufficient to melt the thermoplastic matrix, under a pressure sufficient to ensure continuity of the thermoplastic matrix between the said pieces and to assemble them by melting under pressure, and
- after releasing the blade (1, 31) from the mould, in attaching rings (27, 28), by bonding or by crimping, around a blade root cuff (24), itself attached, by bonding or crimping, around the said blade root (4, 34) if it is not made of thermoplastic composite and already assembled by melting under pressure with the other prefabricated elementary pieces of the blade (1,31).

13. Method according to Claim 12, characterized in that it furthermore comprises the step consisting in producing the elementary piece constituting each filling body (9, 10; 40) by pultrusion of a profiled section of continuous and unidirectional, preferably carbon, fibres which are agglomerated in a thermoplastic matrix, preferably polyether ether ketone (PEEK).

14. Method according to one of Claims 12 and 13, characterized in that it furthermore comprises the step consisting in producing the elementary piece constituting a laminated lower-surface (6a) or upper-surface (6b) skin of the shell (6) by shaping by stamping, between two mould (53) parts (53a, 53b) held at a temperature lower than the melting temperature of the matrix, and having complementary impressions (54a, 54b) corresponding to the shape of the laminated skin (6a, 6b) in question, of a panel (52a) preheated to a melting temperature of the matrix, having the shape, developed flat, of the laminated skin (6a, 6b) in question, and cut out from a precompacted plate (50) obtained by stacking several layers of fabrics and/or plies of continuous and unidirectional reinforcing fibres agglomerated by the matrix under pressure and at a melting temperature of the matrix, than rigidifying in a plate by solidifying the matrix by cooling.

15. Method according to one of Claims 12 to 14, for manufacturing a blade (1) whose blade root (4) is equipped with a pitch control cuff (24), also made of composite with thermoplastic matrix, characterized in that it furthermore comprises the step consisting in producing the elementary piece constituting the cuff (24) by injection moulding, in a mould heated to a temperature lower than the melting temperature of the matrix, of a composite material consisting of short, preferably carbon, reinforcing fibres which are embedded in a molten thermoplastic matrix, preferably a polyether ether ketone (PEEK) matrix.

16. Method according to one of Claims 12 to 15, for manufacturing a blade (1) whose tubular blade root (4) is reinforced by an internal reinforcing collar (22), also made of composite with thermoplastic matrix, characterized in that it furthermore comprises the step consisting in producing the elementary piece constituting the sleeve (22) by injection moulding, in a mould heated to a temperature lower than the melting temperature of the matrix, of a composite material consisting of short reinforcing, preferably carbon, fibres which are embedded in a molten thermoplastic matrix, preferably a PEEK matrix.

17. Method according to one of Claims 12 to 16, for manufacturing a blade (31), having at least one spar (37) made of thermoplastic composite, in which a part external to the shell (36) constitutes a blade rooting part (35) with two attachment bundles (37a, 37b) forming a loop attachment (38) for linking to the hub, extending at least one spar bundle (37) housed in the shell (36), characterized in that it furthermore comprises the step consisting in producing the elementary piece constituting the said spar (37) by rolling a strip of continuous and unidirectional reinforcing fibres which are agglomerated by the said thermoplastic matrix in several layers and under mechanical tension around two spools, then by shaping in a mould by compacting the winding under pressure and at a melting temperature of the matrix, followed by solidification cooling of the matrix, and by cutting out an end part of the winding on the side opposite the loop attachment (38).

18. Method according to one of Claims 12 to 16, for manufacturing a blade (1) having at least one spar (7) made of thermoplastic composite, in which a part external to the shell (6) constitutes a blade rooting part (5) with at least one attachment bundle (13a, 13b), in which an end portion (14a, 14b) for linkage to the hub is fitted with a laminate attachment (15), also made of thermoplastic composite, and extending a spar bundle (7) housed in the shell (6), characterized in that it furthermore comprises the step consisting in producing the elementary piece constituting the spar (7) by producing each attachment bundle (13a, 13b) and the spar bundle (7) which it extends in the form of a bar (57a, 57b) of continuous and unidirectional reinforcing fibres which are agglomerated by the said thermoplastic matrix, obtained by pultrusion at a melting temperature of the matrix, of several plies of continuous and unidirectional fibres which are agglomerated by this matrix, and, if the said rooting part comprises at least two attachment bundles (13a, 13b), each one of which respectively extends one spar bundle (7), in superimposing parts of the corresponding bars (57a, 57b) intended to form the spar part (7) housed in the shell (6), with interposition of at least one ply (58) of continuous and unidirectional fibres which are agglomerated by the said matrix between adjacent superimposed bar (57a, 57b) parts, and in fitting a removable tool (59), in the shape of a wedge, between parts to be held spaced from each other of two neighbouring bars (57a, 57b), to form two attachment bundles (13a, 13b) of the rooting part (5), then in arranging the bar or bars (57a, 57b) in a mould (60), and in inserting each linkage end portion (14a, 14b) of a pultruded bar (57a, 57b) between two laminate elements (56) of the attachment (15), so as to superimpose all the laminate elements (56) of the said attachment (15), in closing the mould (60) and in compacting its contents under pressure and at a melting temperature of the said thermoplastic matrix, in then solidifying the matrix by cooling to rigidify the spar (7) thus obtained with the laminate attachment solidly attached to its rooting part (5).

19. Method according to Claim 18, characterized in that it furthermore consists in producing each laminate element (56) of the laminate attachment (15) made of thermoplastic composite by stacking several layers of fabric and/or of plies of continuous and unidirectional fibres which are agglomerated by the said thermoplastic matrix, by compacting the stack thus obtained under pressure and at a melting temperature of the matrix, in solidifying the matrix by cooling to obtain a compacted plate (55), and in cutting out the said laminate element (56) from the said compacted plate (55).

## Patentansprüche

1. Im wesentlichen aus Verbundwerkstoff bestehendes Blatt für einen Drehflüglerrotor, das umfaßt:
- eine steife verbundschale (6, 36) mit aerodynamischem Profil, die sich der Länge nach entsprechend der Spannweite des Blattes (1, 31) erstreckt und deren eines Längsende, das dazu bestimmt ist, der Rotornabe zugewandt zu sein, einen Blattfuß (4, 34) aufweist, wobei die Schale (6, 36) zumindest eine Lage mit Verstärkungsfasern umfaßt, die durch eine Matrize aus einem synthetischen Versteifungsharz verpreßt sind,
- zumindest einen Längsträger (7, 37), von dem wenigstens ein Teil im wesentlichen in Längsrichtung in der Schale (6, 36) untergebracht ist und der wenigstens ein gestrecktes Verbundbündel aus durchgehenden und in einer Richtung verlaufenden Verstärkungsfasern aufweist, die durch eine Matrize aus einem synthetischen Versteifungsharz verpreßt sind, und
- zumindest einen Füllkörper (9, 10; 40), der in der Schale (6, 36) zwischen letzterer und wenigstens einem Längsträger (7, 37) angeordnet ist und auch Verstärkungsfasern umfaßt, die durch eine Matrize aus einem synthetischen Versteifungsharz verpreßt sind,
**dadurch gekennzeichnet**, daß das Matrizenharz der Schale (6, 36), jedes Füllkörpers (9, 10; 40) und jedes Bündels jedes Längsträgers (7, 37) ein thermoplastisches Harz ist, das die Verbindung und den Zusammenhalt miteinander zwischen der Schale (6, 36) und des in der Schale (6, 36) untergebrachten Teils jedes Längsträgers (7, 37) gewährleistet, wobei das thermoplastische Harz auch die Verbindung und den Zusammenhalt zwischen jedem Füllkörper (9, 10; 40) und der Schale (6, 36) und dem genannten Teil jedes Längsträgers (7, 37) sicherstellt.

2. Blatt nach Anspruch 1,
**dadurch gekennzeichnet**, daß das thermoplastische Harz ein Harz aus Polyätherätherketon (PEEK) ist und die Verstärkungsfasern aus Carbon- und Glasfasern gewählt sind.

3. Blatt nach Anspruch 2,
**dadurch gekennzeichnet**, daß die Verstärkungsfasern der Schale (6, 36), jedes Verbund-Füllkörpers (9, 10; 40) und jedes Verbundbündels jedes Längsträgers (7, 37) von gleicher Beschaffenheit und vorzugsweise aus Carbon sind.

4. Blatt nach einem der Ansprüche 1 bis 3,
**dadurch gekennzeichnet**, daß jeder Füllkörper (9, 10; 40) des Blattes (1, 31) aus Verbund ist und aus durchgehenden und im wesentlichen in einer Richtung verlaufenden Verstärkungsfasern besteht, die durch das genannte thermoplastische Harz verpreßt sind.

5. Blatt nach einem der Ansprüche 1 bis 4, wobei der Blattfuß (4, 34) röhrenförmig ausgebildet ist und die Schale (6, 36) im wesentlichen axial verlängert,
**dadurch gekennzeichnet**, daß der Blattfuß (4, 34) zumindest teilweise aus zwei komplementären Halbschalen (21a, 21b; 41a, 41b) besteht, die jeweils durch eine Verlängerung jeweils einer von zwei geschichteten Verkleidungen (6a, 6b) gebildet werden, die die Druckseitenverkleidung und die Saugseitenverkleidung des Blattes darstellen.

6. Blatt nach einem der Ansprüche 1 bis 5 für einen als insbesondere stromlinienförmiger Hubschrauber-Heckrotor verwendbaren Mehrblatt-Rotor mit einzeln demontierbaren Blättern von der Bauart, bei der ein Blatt (1, 31)-Wurzelteil (5, 35) vorgesehen ist, das wenigstens ein Blatt-Anschlußbündel (13a, 13b; 37a, 37b) umfaßt, das gestreckt, aus Verbund und um seine Längsachse verdrehbar ist und das außerhalb der Schale (6, 36) unter Durchquerung des röhrenförmigen Blattfußes (4, 34) wenigstens ein Verbundbündel wenigstens eines Längsträgers (7, 37) mit einer Längsachse, die im wesentlichen parallel zu derjenigen (A) des Blattes (1, 31) verläuft, verlängert, wobei das Ende jedes Anschlußbündels (13a, 13b; 37a, 37b) an der zur Schale (6, 36) entgegengesetzten Seite als Verbindungsanschluß zu einer Rotornabe gestaltet ist, **dadurch gekennzeichnet**, daß jedes Anschlußbündel (13a, 13b; 37a, 37b) des Wurzelteils (5, 35) aus einem einzigen Stück mit dem Verbundbündel des Längsträgers (7, 37) ist und aus den gleichen Verstärkungsfasern aufgebaut ist, die durch das gleiche thermoplastische Harz verpreßt sind.

7. Blatt nach Anspruch 6,
**dadurch gekennzeichnet**, daß wenigstens ein Längsträger (37) aus einem Strang mit durchgehenden und in einer Richtung verlaufenden Verstärkungsfasern, die durch das erwähnte thermoplastische Harz verpreßt sind, aufgebaut ist und zwei zueinander und zur Längsachse des Blattes im wesentlichen parallele Teile aufweist, die zwei Bündel des Längsträgers (37) bilden, die in der Schale (36) aufgenommen und miteinander durch einen im wesentlichen abgeflachten Schleifenteil verbunden sind, das den Wurzelteil (35) darstellt, wobei das in eine Schleifenform zusammengerollte Ende einen Schleifenanschluß (38) zur Verbindung mit der Nabe bildet, um eine Fassung zu umschließen, durch welche das Blatt (31) dazu bestimmt ist, einzeln auf lösbare Weise mittels eines Bolzens an die Nabe angesetzt zu werden, wobei der erwähnte Schleifenanschluß mit den in der Schale (36) aufgenommenen Bündeln des Längsträgers (37) durch zwei Strangteile verbunden ist, die zwei verdrehbare Anschlußbündel (37a, 37b) des Wurzelteils (35) bilden.

8. Blatt nach Anspruch 6,
**dadurch gekennzeichnet**, daß der Verbindungsanschluß zur Nabe mindestens eines Anschlußbündels (13a, 13b) ein blätteriger Anschluß (15) ist, der wenigsten zwei blätterige Elemente (15a, 15b, 15c) umfaßt, zwischen denen ein Verbindungsendbereich (14a, 14b) des Anschlußbündels (13a, 13b) an der zur Schale (6) entgegengesetzten Seite mehrlagig ausgeführt und zu einem Stück vereinigt ist, wobei jedes blätterige Element (15a, 15b, 15c) einen Stapel von wenigstens zwei Lagen von gleichen Verstärkungsfasern wie diejenigen des Anschlußbündels (13a, 13b) aufweist, die durch das erwähnte thermoplastische Harz verpreßt sind, das die blätterigen Elemente (15a, 15b, 15c) mit dem genannten Verbindungsendbereich (14a, 14b) zu einem Stück vereinigt, wobei der blätterige Anschluß (15) zur Erzielung eines Anschlags zur Schale (6) hin gegen lösbare Rückhalte-Mittel des blätterigen Anschlusses (15) und des Blattes (1) an der Nabe gestaltet ist.

9. Blatt nach Anspruch 8,
**dadurch gekennzeichnet**, daß jedes Anschlußbündel (13a, 13b) wenigstens einen zieh-stranggepreßten dünnen Streifen (57a, 57b) von durchgehenden und in einer Richtung verlaufenden Fasern im erwähnten thermoplastischen Harz umfaßt, wobei die Fasern im wesentlichen gemäß der Längsachse des Anschlußbündels (13a, 13b) ausgerichtet sind, und daß jedes blätterige Element (15a, 15b, 15c) des blätterigen Anschlusses (15) einen Stapel von mehreren Lagen gekreuzter Vliese aus durchgehenden und in einer Richtung verlaufenden Fasern und/oder Lagen aus Fasergeweben umfaßt, dergestalt, daß die Faserrichtungen im wesentlichen unter 45° in bezug zur Längsachse des Anschlußbündels (13a, 13b) verlaufen.

10. Blatt nach einem der Ansprüche 6 bis 9 für einen Mehrblatt-Rotor, dessen Blätter außerdem von variabler Steigung sind, von der Bauart, bei der der Blattfuß (4) ein Lager zum Einbauen und zur Drehung des Blattfußes an einer Nabe aufweist, wobei das Lager einen Stutzen (24) des Blattfußes umfaßt, der bei radialem Aufbau nach außen hin einen Einstellhebel (25) für die Steigung enthält, der dazu bestimmt ist, an eine gemeinsame Einstelleinrichtung der Steigung der Blätter (1) des Rotors gelenkig angebracht zu werden,
**dadurch gekennzeichnet**, daß der Stutzen (24) ein röhrenförmiger Stutzen ist, der aus Verbundwerkstoff mit kurzen Verstärkungsfasern aus Glas oder Carbon geformt ist, die in der gleichen thermoplastischen Matrize eingelassen sind wie die anderen Verbundwerkstoffkomponenten des Blattes (1).

11. Blatt nach Anspruch 10,
**dadurch gekennzeichnet**, daß der Blattfuß (4) auch eine innere Verstärkungsmanschette (22) enthält, die auch aus Verbundwerkstoff mit kurzen Verstärkungsfasern aus Glas oder Carbon geformt ist, die in das gleiche thermoplastische Harz eingelassen sind.

12. Verfahren zur Herstellung eines Blattes nach einem der Ansprüche 1 bis 11, wobei die Verbundschale (6, 36) aus einer geschichteten Druckseitenverkleidung (6a) und aus einer geschichteten Saugseitenverkleidung (6b) aufgebaut ist, umfassend folgende Schritte, die darin bestehen, daß
- jede der geschichteten Verkleidungen (6a, 6b) und jeder der Längsträger (7, 37) aus thermoplastischem Verbundwerkstoff des Blatts (1, 31) in der Form eines vorgefertigten Elementarstücks realisiert wird,
- die vorgefertigten Elementarstücke unter Druck in einer Druckverbindungsform (61) angeordnet werden, die ein unteres Formteil (61a) und ein oberes Formteil (61b) umfaßt, die jeweils innere, komplementäre Vertiefungen enthalten, die jeweils die Form des Saugseitenteils und des Druckseitenteils des Blatts (1, 31) aufweisen, dergestalt, daß die vorgefertigten Elementarstücke in der Form (61) jeweils diejenigen Stellen belegen, die sie im Blatt (1, 31) belegen,
- die Form (61) geschlossen und die Verbindung durch Verschmelzen der genannten vorgefertigten, in der Form (61) angeordneten Elementarstücke gewährleistet wird,
- die Form (61) abgekühlt wird, um die Verfestigung der thermoplastischen Matrize und die Versteifung der Gruppe aus so zusammengesetzten Elementarstücken zu gewährleisten,
- das so erhaltene Blatt (1, 31) aus der Form herausgehoben wird,
- auch jeder der aus thermoplastischem Verbundwerkstoff bestehenden Füllkörper (9, 10; 40) des Blattes (1, 31) in Gestalt eines vorgefertigten Elementarstückes realisiert und er in der Form (61) angeordnet wird,
- eine Druckverbindungsform (61) durch Aufheizen verwendet wird,
- nach Schließen der Form (61) die genannten Stücke auf eine zum Schmelzen der thermoplastischen Matrize ausreichende Temperatur aufgeheizt wird und zwar unter einem ausreichenden Druck, um die Stetigkeit der thermoplastischen Matrize zwischen den genannten Stücken und ihre Verbindung durch Verschmelzung unter Druck sicherzustellen, und daß
- nach dem Herausheben des Blattes (1, 31) aus der Form durch Verklebung oder Aufschrumpfung Ringe (27, 28) um einen Stutzen (24) des Blattfußes aufgebracht werden, der seinerseits durch Verklebung oder Aufschrumpfung um den genannten Blattfuß (4, 34) aufgebracht wird, wenn er nicht aus thermoplastischem Verbundwerkstoff besteht und bereits durch Verschmelzung unter Druck mit den anderen vorgefertigten Elementarstücken des Blattes (1, 31) verbunden ist.

13. Verfahren nach Anspruch 12,
**dadurch gekennzeichnet**, daß es außerdem einen Schritt umfaßt, der darin besteht, daß das jeweils einen Füllkörper (9, 10; 40) bildende Elementarstück durch Zieh-Strangpressung eines Profils aus durchgehenden und in einer Richtung verlaufenden Fasern, vorzugsweise aus Carbon, realisiert wird, die in einer thermoplastischen Matrize, vorzugsweise aus Polyätherätherketon (PEEK), verpreßt sind.

14. Verfahren nach einem der Ansprüche 12 und 13,
**dadurch gekennzeichnet**, daß es außerdem einen Schritt umfaßt, der darin besteht, daß das eine geschichtete Druckseitenverkleidung (6a) oder Saugseitenverkleidung (6b) der Schale (6) bildende Elementarstück durch Informbringen mittels Pressung einer auf die Schmelztemperatur der Matrize aufgeheizten Platte (52a) zwischen zwei Teilen (53a, 53b) der Form (53) realisiert wird, die auf einer geringeren Temperatur als die Schmelztemperatur der Matrize gehalten werden und komplementäre Vertiefungen (54a, 54b) entsprechend der Form der betrachteten geschichteten Verkleidung (6a, 6b) aufweisen, wobei die Platte (52a) die in die Ebene abgewickelte Form der betrachteten geschichteten Verkleidung (6a, 6b) hat und aus einer vorverdichteten Scheibe (50) ausgeschnitten ist, die durch Stapelung mehrerer Lagen aus Gewebe und/oder Vlies aus durchgehenden und in einer Richtung verlaufenden Verstärkungsfasern erhalten wird, die durch die Matrize unter Druck und bei Schmelztemperatur der Matrize verpreßt werden, und daß dann eine plattenweise Versteifung durch Verfestigung der Matrize durch Abkühlung realisiert wird.

15. Verfahren nach einem der Ansprüche 12 bis 14 zur Herstellung eines Blatts (1), dessen Blattfuß (4) mit einem Stutzen (24) zur Einstellung der Steigung ausgestattet ist, auch aus thermoplastischem Matrizenverbundwerkstoff,
**dadurch gekennzeichnet**, daß es außerdem einen Schritt umfaßt, der darin besteht, daß das den Stutzen (24) bildende Elementarstück durch Spritzgießen in einer auf eine Temperatur, die niedriger als die Schmelztemperatur der Matrize ist, aufgeheizte Form eines Verbundmaterials realisiert wird, das aus kurzen Verstärkungsfasern, vorzugsweise aus Carbon, besteht, die in eine schmelzflüssige thermoplastische Matrize, vorzugsweise aus Polyätherätherketon (PEEK), eingelassen sind.

16. Verfahren nach einem der Ansprüche 12 bis 15 zur Herstellung eines Blatts (1), dessen röhrenförmiger Blattfuß (4) durch eine innere Verstärkungsmanschette (22) ebenfalls aus thermoplastischem Matrizenverbundwerkstoff verstärkt ist,
**dadurch gekennzeichnet**, daß es außerdem einen Schritt umfaßt, der darin besteht, daß das die Manschette (22) bildende Elementarstück durch Spritzgießen in einer auf eine Temperatur, die niedriger als die Schmelztemperatur der Matrize ist, aufgeheizten Form eines Verbundmaterials realisiert wird, das aus kurzen Verstärkungsfasern, vorzugsweise aus Carbon, besteht, die in eine schmelzflüssige thermoplastische Matrize, vorzugsweise aus Polyätherätherketon (PEEK), eingelassen sind.

17. Verfahren nach einem der Ansprüche 12 bis 16 zur Herstellung eines Blatts (31), das wenigstens einen Längsträger (37) aus thermoplastischem Verbundmaterial aufweist, von dem ein außerhalb der Schale (36) liegender Teil einen Blattwurzelteil (35) mit zwei Anschlußbündeln (37a, 37b) darstellt, die einen Schleifenanschluß (38) Zur Verbindung mit der Nabe bilden und wenigstens ein in der Schale (36) untergebrachtes Bündel des Längsträgers (37) verlängern,
**dadurch gekennzeichnet**, daß es außerdem einen Schritt umfaßt, der darin besteht, daß das den Längsträger (37) bildende Elementarstück durch Wickeln eines Bandes aus durchgehenden und in einer Richtung verlaufenden Verstärkungsfasern, die durch die thermoplastische Matrize verpreßt werden, in mehreren Lagen und unter mechanischer Spannung um zwei Spulen, dann durch Informbringung in einer Form durch Verdichtung der Wicklung unter Druck und bei einer Schmelztemperatur der Matrize realisiert wird, gefolgt von einer Verfestigungsabkühlung der Matrize und einem Abschneiden eines Wicklungs-Endstücks an der zum Schleifenanschluß (38) entgegengesetzten Seite.

18. Verfahren nach einem der Ansprüche 12 bis 16 zur Erzeugung eines Blatts (1), das wenigstens einen Längsträger (7) aus thermoplastischem Verbundmaterial aufweist, von dem ein außerhalb der Schale (6) liegender Teil einen Blattwurzelteil (5) mit wenigstens einem Anschlußbündel (13a, 13b) darstellt, bei dem ein Endbereich (14a, 14b) zur Verbindung mit der Nabe mit einem blätterigen Anschluß (15) auch aus thermoplastischem Verbundwerkstoff versehen ist und das ein in der Schale (6) untergebrachtes Bündel des Längsträgers (7) verlängert,
**dadurch gekennzeichnet**, daß es außerdem einen Schritt umfaßt, der darin besteht, daß das den Längsträger (7) bildende Elementarstück realisiert wird, indem jedes Anschlußbündel (13a, 13b) und das dieses verlängernde Bündel des Längsträgers (7) in Gestalt eines dünnen Streifens (57a, 57b) aus durchgehenden und in einer Richtung verlaufenden, durch die thermoplastische Matrize verpreßten Verstärkungsfasern ausgeführt ist, der bei einer Schmelztemperatur der Matrize durch Zieh-Strangpressung mehrerer Vliese aus durchgehenden und in einer Richtung verlaufenden Fasern, die durch diese Matrize verpreßt werden, erhalten wird, und daß, wenn das Wurzelstück zumindest zwei Anschlußbündel (13a, 13b) umfaßt, von denen jedes jeweils ein Bündel des Längsträgers (7) verlängert, Teile der entsprechende dünnen Streifen (57a, 57b) übereinander geschichtet werden, die dazu bestimmt sind, den in der Schale (6) untergebrachten Teil des Längsträgers (7) zu bilden, und zwar unter Zwischeneinfügung zumindest eines Vlieses (58) aus durchgehenden und in einer Richtung verlaufenden Fasern, die durch die Matrize verpreßt sind, zwischen übereinander angeordneten Teilen von benachbarten dünnen Streifen (57a, 57b), und daß ein lösbares Werkzeug (59) in Form eines Keils zwischen zueinander mit Abstand zu haltenden Teilen zweier benachbarter dünner Streifen (57a, 57b) zur Formung zweier Anschlußbündel (13a, 13b) des Wurzelteils (5) angebracht wird, daß dann der oder die dünnen Streifen (57a, 57b) in einer Form (60) angeordnet werden, und daß jeder Verbindungsendbereich (14a, 14b) eines zieh-stranggepreßten dünnen Streifens (57a, 57b) zwischen zwei blätterigen Elementen (56) des Anschlusses (15) eingeschachtelt wird, so daß alle blätterigen Elemente (56) des Anschlusses (15) übereinander geschichtet sind, daß die Form (60) geschlossen wird und daß ihr Inhalt unter Druck und bei einer Schmelztemperatur der thermoplastischen Matrize verdichtet wird, daß danach die Matrize durch Abkühlung verfestigt wird, um den so erhaltenen Längsträger (7) mit dem blätterigen, aus einem Stück bestehenden Anschluß am Wurzelteil (5) zu versteifen.

19. Verfahren nach Anspruch 18,
**dadurch gekennzeichnet**, daß es außerdem darin besteht, daß jedes blätterige Element (56) des blätterigen Anschlusses (15) aus thermoplastischem Verbundwerkstoff realisiert wird, indem mehrere Gewebelagen und/oder Vlieslagen aus durchgehenden und in einer Richtung verlaufenden Fasern gestapelt werden, indem die so erhaltene Stapelung unter Druck und bei einer Schmelztemperatur der Matrize verdichtet wird, indem die Matrize durch Abkühlung zur Erzielung einer verdichteten Platte (55) verfestigt wird, und indem das erwähnte, blätterige Element (56) aus der verdichteten Platte (55) ausgeschnitten wird.
